# EUROPÄISCHE PATENTANMELDUNG

(11) **EP 4 717 404 A1**
(43) Veröffentlichungstag der Anmeldung: **01.04.2026**
(21) Anmeldenummer: 24203709.1
(22) Anmeldetag: 30.09.2024
(51) Int. Cl.: B23Q 16/10, F16D 55/12, F16D 65/18

(54) **NEUARTIGES GEHÄUSETEIL FÜR EINE PNEUMATISCHE KLEMM- UND/ODER BREMSVORRICHTUNG**

(71) Anmelder: HEMA Maschinen- und Apparateschutz GmbH, 60486 Seligenstadt (DE)
(72) Erfinder: Likus, Edmund, 60486 Seligenstadt (DE)
(74) Vertreter: Herrmann, Daniel

(57) **Zusammenfassung**

Es wird ein Gehäuseteil für eine pneumatische Klemm- und/oder Bremsvorrichtung beschrieben, das Gehäuseteil umfassend: eine erste ringförmige Aussparung (11a) zum Einklemmen einer ersten ringförmigen Federplatte (1a);
ein erstes Klemmelement (8_1) umfassend ein erstes Endstück (8a), wobei das erste Endstück (8a) eine erste Endfläche (8f) und eine erste Klemmfläche (7a) aufweist, wobei das erste Klemmelement (8_1) ausgelegt ist, wenn die erste Federplatte (1a) derart in der ersten Aussparung (11a) zwischen einer durch die erste Aussparung (11a) definierten ersten Anlagefläche (101) und einer durch die erste Aussparung (11a) definierten zweiten Anlagefläche (102) eingeklemmt ist, dass sich ein erstes Ende der ersten Federplatte (1a) an der durch die erste Aussparung (11a) definierten ersten Anlagefläche (101) abstützt und ein zweites Ende der ersten Federplatte (1a) auf die durch die erste Aussparung (11a) definierten zweite Anlagefläche (102) drückt, eine erste Klemm- und/oder Bremskraft auf ein erstes zu klemmendes und/oder zu bremsendes Objekt (5) über die erste Klemmfläche (7a) zu übertragen;
eine zweite ringförmige Aussparung (nb) zum Einklemmen einer zweiten ringförmigen Federplatte (1b);
ein zweites Klemmelement (8_2) umfassend ein zweites Endstück (8a), wobei das zweite Endstück (8a) eine zweite Endfläche (8f) und eine zweiten Klemmfläche (7b) aufweist, wobei das zweite Klemmelement (8_2) ausgelegt ist, wenn die zweite Federplatte (1b) derart in der zweiten Aussparung (nb) zwischen einer durch die zweite Aussparung (nb) definierten ersten Anlagefläche (101) und einer durch die zweite Aussparung (nb) definierten zweiten Anlagefläche (102) eingeklemmt ist, dass sich ein erstes Ende der zweiten Federplatte (1b) an der durch die zweite Aussparung (nb) definierten ersten Anlagefläche (101) abstützt und ein zweites Ende der zweiten Federplatte (1b) auf die durch die zweite Aussparung (nb) definierten zweite Anlagefläche (102) drückt, eine zweite Klemm- und/oder Bremskraft auf ein zweites zu klemmendes und/oder zu bremsendes Objekt (5) über die zweite Klemmfläche (7b) zu übertragen;
dadurch gekennzeichnet, dass
die erste Endfläche (8f) des ersten Klemmelements (8_1) und die zweite Endfläche (8f) des zweiten Klemmelements (8_2) voneinander abgewandt, und vorzugsweise in entgegengesetzte Richtungen orientiert, angeordnet sind. Es wird ebenfalls eine Klemm- und/oder bremsenden Objekts beschrieben.

## Beschreibung

### TECHNISCHES GEBIET

Die Erfindung betrifft ein Gehäuseteil für eine pneumatische Klemm- und/oder Bremsvorrichtung und eine pneumatische Klemm- und/oder Bremsvorrichtung mit solch einem Gehäuseteil. Die Erfindung betrifft auch die Verwendung dieses Gehäuseteils bzw. dieser Vorrichtung zum Klemmen und/oder Bremsen eines Objekts, insbesondere einer routinebaren Welle.

### HINTERGRUND

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Die Welle kann eine Rotationsachse oder Schwenkachse von einer solchen Maschine sein. Weiterhin werden mittels einer Welle rotier- oder schwenkbare Tische dazu verwendet, Werkzeuge oder Werkstücke in die geeignete Bearbeitungsposition zu stellen oder Werkstücke mit entsprechenden Drehzahlen zu bewegen. Voraussetzung für ein genaues und effizientes Bearbeiten ist dabei unter Anderem eine hohe Drehzahl der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle oder Scheibe fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Komponenten, insbesondere federnde Platten, mit Druckluft beaufschlagt und können einige der genannten Nachteile von hydraulischen Klemmvorrichtungen überwinden.

DE 20 2023 101 258 beschreibt pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. In der Praxis hat sich jedoch gezeigt, dass die damit erreichten Klemmkräfte für manche Anwendungen optimierbar sind oder nicht ausreichen.

### KURZBESCHREIBUNG

Ausgehend von dem eingangs genannten Stand der Technik liegt der Erfindung die Aufgabe zugrunde, Mittel bereitzustellen, die eine pneumatische Klemm- und/oder Bremsvorrichtung dazu befähigen, höhere Klemm- und/oder Bremskräfte auf ein zu klemmendes und/oder zu bremsendes Objekt auszuüben.

Die Erfindung löst diese Aufgabe mit einem Gehäuseteil mit den Merkmalen des Patentanspruchs 1 und mit einer Klemm- und/oder Bremsvorrichtung mit den Merkmalen des Patentanspruchs 10. Bevorzugte Ausführungsformen sind in den abhängigen Ansprüchen, in der Beschreibung und in den Figuren beschrieben.

Entsprechend der erfindungsgemäßen Lösung wird ein Gehäuseteil für eine pneumatische Klemm- und/oder Bremsvorrichtung vorgeschlagen, das Gehäuseteil umfassend: eine erste ringförmige Aussparung zum Einklemmen einer ersten ringförmigen Federplatte; ein erstes Klemmelement umfassend ein erstes Endstück, wobei das erste Endstück eine erste Endfläche und eine erste Klemmfläche aufweist, wobei das erste Klemmelement ausgelegt ist, wenn die erste Federplatte derart in der ersten Aussparung zwischen einer durch die erste Aussparung definierten ersten Anlagefläche und einer durch die erste Aussparung definierten zweiten Anlagefläche eingeklemmt ist, dass sich ein erstes Ende der ersten Federplatte an der durch die erste Aussparung definierten ersten Anlagefläche abstützt und ein zweites Ende der ersten Federplatte auf die durch die erste Aussparung definierten zweite Anlagefläche drückt, eine erste Klemm- und/oder Bremskraft auf ein erstes zu klemmendes und/oder zu bremsendes Objekt über die erste Klemmfläche zu übertragen; eine zweite ringförmige Aussparung zum Einklemmen einer zweiten ringförmigen Federplatte; ein zweites Klemmelement umfassend ein zweites Endstück, wobei das zweite Endstück eine zweite Endfläche und eine zweiten Klemmfläche aufweist, wobei das zweite Klemmelement ausgelegt ist, wenn die zweite Federplatte derart in der zweiten Aussparung zwischen einer durch die zweite Aussparung definierten ersten Anlagefläche und einer durch die zweite Aussparung definierten zweiten Anlagefläche eingeklemmt ist, dass sich ein erstes Ende der zweiten Federplatte an der durch die zweite Aussparung definierten ersten Anlagefläche abstützt und ein zweites Ende der zweiten Federplatte auf die durch die zweite Aussparung definierten zweite Anlagefläche drückt, eine zweite Klemm- und/oder Bremskraft auf ein zweites zu klemmendes und/oder zu bremsendes Objekt über die zweite Klemmfläche zu übertragen; wobei die erste Endfläche des ersten Klemmelements und die zweite Endfläche des zweiten Klemmelements voneinander abgewandt, und vorzugsweise in entgegengesetzte Richtungen orientiert, angeordnet sind.

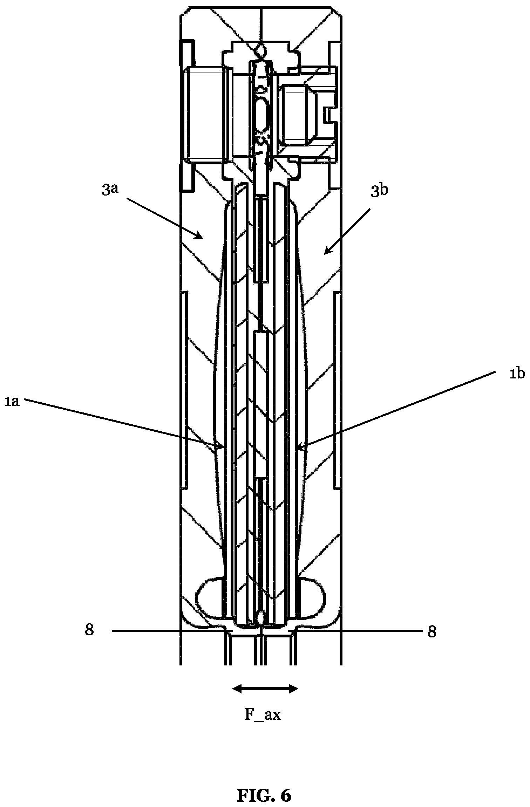

Der vorliegenden Erfindung liegt die Erkenntnis der Erfinder zugrunde, dass die durch die Federkraft mögliche Klemm- und/oder Bremskraft auf das zu klemmende bzw. bremsende Objekt durch das Gehäuse limitiert wird. Die Erfinder haben erkannt, dass ein limitierender Faktor Axialkräfte sind, die auftreten, wenn die im Stand der Technik miteinander befestigten Gehäusehälften aufeinandergelegt und miteinander befestigt werden (vgl. F_ax in Fig. 6). An den dann aneinander angrenzenden Endflächen der Klemmelemente (vgl. Fig. 6) treten diese Axialkräfte auf, die einen Widerstand für die Federplatten darstellen. Die Erfinder haben erkannt, dass durch die angesprochene gänzlich neue Gehäusegeometrie mit zwei Klemmelementen mit voneinander abgewandten Endflächen diese Axialkräfte eliminiert werden können und dadurch die Federkraft effektiver auf das zu klemmende Objekt übertragen werden kann. Entgegen dem bisherigen allgemeinen Ansatz mit zusammengeführten Klemmelementen, wird demnach das Auseinanderbringen der zwei Klemmelemente effektiver für den Betrieb der Klemm- und/oder Bremsvorrichtung. Dadurch lassen sich die Haltemomente steigern, ohne die Gebrauchslebensdauer der Vorrichtung zu reduzieren. Ferner wird dadurch ein messbarer Zugewinn an Klemm- und/oder Bremskraft erzeugt, ohne die Funktionalitäten, wie Dichtheit sowie Öffnung- und Schließgeschwindigkeit, der Klemm- und/oder Bremsvorrichtung negativ zu beeinträchtigen.

Gemäß einem bevorzugten Aspekt ist das erste Endstück mittels eines von dem ersten Endstück bis zu dem zweiten Endstück sich durchgängig erstreckenden Gehäuseabschnitts mit dem zweiten Endstück verbunden. Dies ist förderlich für eine synchrone Aktivierung der beiden Endstücke.

Nach einem bevorzugten Aspekts erfolgt die erste Klemm- und/oder Bremskraft in einer ersten Klemmebene, die durch zwei Vektoren aufgespannt wird, die jeweils einen Radius der ersten ringförmigen Aussparung bilden und sich eine Längsachse des ersten Endstücks quer, vorzugsweise senkrecht, zu der ersten Klemmebene erstreckt und/oder die zweite Klemm- und/oder Bremskraft in einer zweiten Klemmebene erfolgt, die durch zwei Vektoren aufgespannt wird, die jeweils einen Radius der zweiten ringförmigen Aussparung bilden und sich eine Längsachse des zweiten Endstücks quer, vorzugsweise senkrecht, zu der zweiten Klemmebene erstreckt, vorzugsweise wobei die erste Endfläche des ersten Klemmelements und die zweite Endfläche des zweiten Klemmelements in entgegengesetzte Richtungen der Längsachsen der Endstücke orientiert sind. Diese geometrischen Maßnahmen erlauben jeweils einzeln und in Kombination eine besonders effektive und gleichmäßige Beaufschlagung des zu klemmenden oder bremsenden Objekts mit der Klemm- bzw. Bremskraft.

Bevorzugt meist das Gehäuseteil einen, vorzugsweise einteiligen oder einstückigen, Gehäusebalken auf, der mit den beiden Klemmelementen verbunden ist und sich zwischen einem äußeren Rand und einem inneren Rand des Gehäuseteils und zwischen den Aussparungen erstreckt, vorzugsweise wobei der Gehäusebalken auf einer ersten Balkenoberfläche die erste ringförmige Aussparung ausbildet und auf einer zweiten Balkenoberfläche, die der ersten Balkenoberfläche abgewandt und/oder entgegengesetzt ist, die zweite ringförmige Aussparung ausbildet. Bevorzugt kann sich die Längsachse des Gehäusebalken quer zu einer Längsachse des durchgängigen Gehäuseabschnitts erstrecken und mit diesem vorzugweise einteilig oder einstückig verbunden sein. Diese Maßnahmen für einen solcher innerhalb des Gehäuseteils (zentral) angeordneten Gehäusebalken sind einzeln und in Kombination für die Stabilität und die Kompaktheit des Gehäuseteils förderlich und erlaubt zudem eine bessere Synchronisierung der Aktivierungen der Klemmelemente durch die Federplatten. Bevorzugt erstreckt sich der Gehäusebalken mit dessen Längsachse quer zu der Längsachse des ersten und/oder zweiten Endstücks, und vorzugsweise im Wesentlichen parallel zu der ersten und/oder zweiten Klemmebene. Die erste ringförmige Aussparung kann in Richtung der Längsachse des ersten Endstücks hin geöffnet sein und/oder die zweite ringförmige Aussparung kann in Richtung der Längsachse des zweiten Endstücks hin geöffnet sein. Diese geometrischen Maßnahmen erlauben jeweils einzeln und in Kombination einen besonders effektive und gleichmäßige Beaufschlagung des zu klemmenden oder bremsenden Objekts mit der Klemm- bzw. Bremskraft.

Eine besonders bevorzugte Maßnahme zur weiteren Reduzierung des Gehäusewiderstands stellt die Herrichtung von ein oder mehreren Ausschnitten in der Oberfläche des Gehäusebalkens am Übergang des Gehäusebalkens zu den angrenzenden ein oder mehreren ringförmigen Aussparungen dar. Die erste Balkenoberfläche kann im Bereich der ersten ringförmigen Aussparung einen ersten Ausschnitt ausbilden und/oder die zweite Balkenoberfläche kann im Bereich der zweiten ringförmigen Aussparung einen zweiten Ausschnitt ausbilden, vorzugsweise wobei sich für jeden der Ausschnitte die in der betreffenden ringförmigen Aussparung eingeklemmte Federplatte über den Ausschnitt hinweg erstreckt. Diese Ausschnitte ermöglichen, dass der Gehäusebalken in dem Bereich angrenzend zu dem jeweiligen Ausschnitt ausgelegt ist, sich in Reaktion auf das Drücken der in der betreffenden ringförmigen Aussparung eingeklemmten Federplatte auf die durch die betreffende ringförmige Aussparung definierte zweite Anlagefläche, insb. in radialer Richtung, zu dehnen. Durch diese verstärkte Dehnbarkeit des Gehäuseteils, welches aus Werkzeugstahl gefertigt sein kann, ermöglicht, dass die Klemmelemente bei Aktivierung durch die Federplatten über nahezu die gesamte jeweilige Klemmfläche hinweg sich radial gleichmäßig bewegen, so dass eine Drehung der Klemmelemente reduziert wird oder gar ausgeschlossen werden kann. Insbesondere führt das eingangs geschilderte Eliminieren der Axialkräfte dazu, dass die Federkraft zu einer nahezu vollständigen parallelen Bewegung der Klemmelemente führt. Dabei führt diese Ausgestaltung des Gehäusebalkens dazu, dass Spannungen größtenteils durch (radiales) Dehnen des Gehäusebalkens abgebaut werden. Durch diese Maßnahmen kann der im Stand der Technik vorliegende Drehwinkel der Klemmelemente bis zu 95 % reduziert werden, sodass die Klemmelemente sich über die Klemmfläche hinweg gleichmäßig und im Wesentlichen linear in radialer Richtung bewegen. Die Bewegung der Klemmelemente kann dann quer, in Wesentlichen senkrecht, zu den Längsachse der Klemmelemente über die gesamte oder nahezu vollständige Klemmfläche hinweg erfolgen. Lediglich kleinere Verdrehungen am jeweiligen (freien) Ende des Klemmelements können dazu führen, dass der Hub an diesem (freien) Ende noch leicht größer ausfällt als am entgegengesetzten Ende der jeweiligen Klemmfläche.

Die Erfinder haben herausgefunden, dass besonders geeignete Größen für die effektive Einstellung der Dehnbarkeit des Gehäusebalkens in einem Bereich angrenzend zu den Ausschnitten die folgenden Größen sind: die Ausschnittslänge, und/oder die Dicke des Gehäusebalkens in einem Bereich angrenzend zu dem Ausschnitt, und/oder ein oder mehrere Krümmungsradien der betreffenden Balkenoberfläche und/oder Position und/oder radiale Länge einer Öffnung in dem Bereich des Gehäusebalkens, der sich zwischen und angrenzend zu den Ausschnitten erstreckt. Besonders geeignete Wertebereiche für diese Größen haben die Erfinder herausgefunden und sind im Folgenden beschrieben. Andere Größen sind zudem denkbar.

Eine weitere zusätzliche oder alternative besonders bevorzugte Maßnahme zur weiteren Reduzierung des Gehäusewiderstands stellt eine in einem Arm des Klemmelements hergerichtete Verjüngung dar. Bevorzugt haben ein oder mehrere der Klemmelemente einen an das dazugehörige Endstück des Klemmelements angrenzenden Arm, wobei sich ein Abschnitt des Arms zu dem angrenzenden Endstück hin verjüngt. Diese Verjüngung bewirkt eine größere Flexibilität im Bereich des Klemmelements und damit eine Reduktion des Gehäusewiderstands unter Beibehaltung der sonstigen Eigenschaften der Vorrichtung.

In dieser Offenbarung wird der Begriff "verjüngt" bzw. "Verjüngung" als eine Querschnittsreduktion verstanden. Die Reduktion des Querschnitts kann allmählich bzw. graduell, schrittweise, stufenweise, in Wellen oder kontinuierlich erfolgen. Demnach ist es so, dass sich am einen ersten Ende des verjüngten Armabschnitts, das zum Endstück hin angeordnet ist, der Querschnitt des Arms geringer ist, als an dem anderen, dem Endstück abgewandten zweiten Ende des verjüngten Armabschnitts, wobei zwischen den beiden Enden der Querschnitt des Arms nicht notwendigerweise kontinuierlich und/oder graduell entlang des Arms abnimmt. Die Querschnittsreduktion kann abrupt bzw. stufenweise erfolgen. Auch kann der Querschnitt des Arms zwischen den beiden Enden des verjüngten Armabschnitts zwischendrin nach einer anfänglichen Querschnittsreduktion wieder ansteigen, solange insgesamt vom zweiten Ende des Armabschnitts zum ersten Ende des Armabschnitts eine Reduktion des Querschnitts des Arms zu verzeichnen ist.

Nach einem bevorzugten Aspekt der Erfindung weist der sich verjüngende Abschnitt des Arms ein oder mehrere Aussparungen im Arm auf. Die Verjüngung kann durch die ein oder mehreren Aussparungen gegeben sein. Der verjüngte Armabschnitt kann auch, zusätzlich zu einer kontinuierlichen und/oder graduellen Verjüngung zum Endstück hin, die ein oder mehreren Aussparungen aufweisen. Mit anderen Worten tragen die Aussparungen zu der Verjüngung bei, definieren diese oder verstärken diese. Die ein oder mehreren Aussparungen könne bevorzugt mindestens eine Aussparung mit abgerundeter Kontur aufweisen. Die ein oder mehreren Aussparungen können bevorzugt zwei oder mehr wellenförmige Aussparungen umfassen. Durch die ein oder mehreren Aussparung, insbesondere durch die abgerundete Kontur und die Wellenform, werden Spannungen im Gehäuse besser verteilt und die für die Übertragung der Klemmkraft förderliche Wirkung der Verjüngung wird erhöht. Beispielsweise kann im Arm im Bereich der größten Vertiefung einer jeden Aussparung sich ein Spannungszentrum bilden. Diese Aspekte der Aussparungen können einzelnen oder zusammen besonders effektive Beiträge zur Reduktion des Gehäusewiderstands herbeiführen.

Nach einem bevorzugten Aspekt der Erfindung ist das Klemmelement derart ausgelegt, dass, wenn das zweite Ende der Federplatte auf die zweite Anlagefläche drückt, das Endstück um einen Drehpunkt gegenüber dem Abschnitt des Arms gedreht wird und dadurch die Klemm- und/oder Bremskraft auf das zu klemmende und/oder zu bremsende Objekt über die Klemmfläche übertragen wird. Dadurch, dass sich das Endstück gegenüber dem verjüngten Abschnitt des Arms bei der Drehung dreht, und sich der zum Endstück angrenzende Arm zum drehenden Endstück hin verjüngt, liegt die Verjüngung dort vor, wo eine besonders große Steigerung der Flexibilität des Gehäuseteils erzielt wird. Dies gilt umso mehr, wenn die Verjüngung, insbesondere die mindestens eine Aussparung mit abgerundeter Kontur, im Bereich des Übergangs des Arms zum Endstück vorliegt und/oder sich der Abschnitt des Arms zur zweiten Anlagefläche hin und/oder im Bereich des Drehpunktes (z.B. zum Drehpunkt hin oder von dem Drehpunkt weg) verjüngt. Besonders große Steigerungen der Flexibilität werden auch erzielt, wenn der Drehpunkt innerhalb des Klemmelements oder in einem Bereich um das Klemmelement herum angeordnet ist, und jeweils vorzugsweise im Bereich des Abschnitts des Arms oder im Bereich zwischen dem Abschnitt des Arms und der Klemmfläche oder im Bereich des Endstücks vorliegt.

Nach einem bevorzugten Aspekt der Erfindung weist das Klemmelement an einer ersten, dem Objekt zugewandten Seitenfläche des Endstücks die Klemmfläche auf und weist an einer zweiten Seitenfläche des Endstücks, die vorzugsweise der ersten Seitenfläche und/oder dem Objekt abgewandt und/oder der ersten Seitenfläche gegenüberliegend ist, die zweite Anlagefläche auf. Dadurch wird die durch die Federplatten auf das Klemmelement bewirkte Federkraft besonders effektiv über die Klemmfläche auf das Objekt geleitet.

Nach einem bevorzugten Aspekt der Erfindung ist das Klemmelement derart elastisch, dass das Klemmelement einen Hebelarm bildet, der ausgelegt ist, sich durch das Drücken mindestens einer der Federplatten auf die zweite Anlagefläche mindestens einer der Gehäuseteile elastisch zu verformen und dadurch um einen Drehpunkt derart zu drehen, dass die Klemmfläche des Klemmelements die Klemm- und/oder Bremskraft auf das zu klemmende und/oder zu bremsende Objekt überträgt. Das Klemmelement kann einen elastisch verformbaren Hebelarm bilden, der mittels dadurch bewirkter Drehung die Klemmfläche gegen das Objekt drückt, um so die Klemm- und/oder Bremskraft auf das Objekt zu übertragen.

Das Endstück des Klemmelements kann bevorzugt entlang der Klemmfläche einen Abschnitt eines Hebelarms bilden, der derart ausgelegt ist, dass bei der Drehung des Hebelarms um den Drehpunkt ein erstes Ende des Hebelarmabschnitts um einen ersten radialen Hub näher an das Objekt bewegt wird. Die Erfinder haben herausgefunden, dass durch die erfindungsgemäß vorgesehene Verjüngung des Armabschnitts des Klemmelements der erste radiale Hub dem Ein- bis Zehnfachen, dem 1,25- bis Fünffachen, oder dem 1,35- bis Zweifachen, eines zweiten radialen Hubes entspricht, durch den ein zweites Ende des Hebelarmabschnitts bei der Drehung des Hebelarms um den Drehpunkt näher an das Objekt bewegt wird, welches zweite Ende des Hebelarmabschnitts näher an dem Drehpunkt liegt als das erste Ende des Hebelarmabschnitts. Bei konventionellen Klemmen- und/oder Bremsvorrichtungen findet der überwiegende oder gar fast vollständige Teil des radialen Hubes der Klemmfläche auf das Objekt hin an dem ersten Ende des Hebelarmabschnitts statt, während die näher am Drehpunkt gelegenen Bereiche der Klemmfläche kaum oder gar keinen radialen Hub zu verzeichnen haben. Somit wird die Klemm- und/oder Bremskraft nur über ein Bruchteil der zur Verfügung stehenden Klemmfläche auf das Objekt übertragen und der Verschleiß an Klemmelement und/oder Objekt kann hoch ausfallen. Die Erfinder haben herausgefunden, dass durch die erfindungsgemäße Verjüngung der zweite radiale Hub am zweiten Ende des Hebelarmabschnitts signifikant vergrößert werden kann, sodass der dort stattfindende zweite radiale Hub beispielsweise von 5 % auf 65% des ersten radialen Hubes am ersten Ende des Hebelarmabschnitts gesteigert werden kann. Dadurch liegt die Klemmfläche mit einer größeren Fläche oder sogar der gesamten Fläche an dem zu klemmenden bzw. bremsenden Objekt auf und die Wirkung der Klemm-bzw. Bremskraft wird verbessert und der Verschleiß wird reduziert. Durch die erfindungsgemäße Verjüngung kann das Material des Klemmelements zwischen Klemmfläche und Drehpunkt reduziert werden, sodass nahezu die gesamte Klemmfläche in Kontakt mit dem Objekt kommt.

Entsprechend der erfindungsgemäßen Lösung wird ebenfalls eine Klemm- und/oder Bremsvorrichtung zum Klemmen und/oder Bremsen eines zu klemmenden und/oder bremsenden Objekts bereitgestellt, die Vorrichtung umfassend:
ein Gehäuse umfassend: ein oder mehrere Gehäuseteile nach irgendeinem der vorangehenden Ansprüche; und für jedes der Gehäuseteile, eine erste dem Gehäuseteil zugewiesene Abdeckung und eine zweite dem Gehäuseteil zugewiesene Abdeckung;
wobei für jedes der Gehäuseteile:
   die erste Abdeckung derart die erste Aussparung abdeckt und die zweite Abdeckung derart die zweite Aussparung abdeckt, dass die Aussparungen zusammen einen Innenraum innerhalb des Gehäuses bilden, wobei der Innenraum eine darin angeordnete Feder umfasst, welche Feder eine erste ringförmige Federplatte und eine zweite ringförmige Federplatte umfasst, wobei die erste Federplatte zwischen der durch die erste Aussparung definierten ersten Anlagefläche und der durch die erste Aussparung definierten zweiten Anlagefläche eingeklemmt ist und die zweite Federplatte zwischen der durch die zweite Aussparung definierten ersten Anlagefläche und der durch die zweite Aussparung definierten zweiten Anlagefläche eingeklemmt ist, so dass in dem Innenraum mindestens ein Druckraum gebildet wird, der zumindest teilweise durch die Federplatten begrenzt wird, wobei der Druckraum be- oder entlüftbar ist und mit Überdruck eines dem Gehäuse zuführbaren Druckmediums beaufschlagbar ist, und wobei die Federplatten derart relativ zu den mindestens einen Druckraum angeordnet sind, dass durch Be- oder Entlüften des Druckraums oder Beaufschlagung des Druckraum mit Überdruck, eine Biegung mindestens einer der Federplatten veränderbar ist und dadurch die Klemm- und/oder Bremsvorrichtung zwischen einem geöffneten Zustand, in dem ein zu klemmendes und/oder zu bremsendes Objekt von den Klemmflächen beabstandet ist, und einem geschlossenen Zustand, in dem ein oder mehrere der Klemmflächen eine Klemm- und/oder Bremskraft auf das Objekt übertragen, wechselt.

Die Verjüngung des Abschnitts des Arms des Klemmelements zumindest eines der Gehäuseteile kann derart geformt sein, dass wenn die Klemm- und/oder Bremsvorrichtung von dem geöffneten Zustand in dem geschlossenen Zustand wechselt, ein größeres Haltemoment bzw. eine größeren Klemmkraft auf das Objekt angelegt wird (Reduktion des Gehäusewiderstands durch die Verjüngung) und insbesondere der erste radiale Hub des Klemmelements des zumindest einen der Gehäuseteile zum Objekt hin dem Ein- bis Zehnfachen, vorzugsweise dem 1,25- bis Fünffachen, besonders bevorzugt dem 1,35- bis Zweifachen, des zweiten radialen Hubes des Klemmelements des zumindest einen der Gehäuseteile zum Objekt hin entspricht, was den Verschleiß an der Klemmfläche und/oder dem Objekt reduziert.

Sofern diese Kurzbeschreibung der Erfindung Merkmale beschreibt, die nicht in den Patentansprüchen aufgeführt sind, so stellen diese Merkmale keine wesentlichen Merkmale in dem Sinne dar, dass diese Merkmale zwangsläufig zur Beschreibung der Erfindung in die Patentansprüche aufzunehmen sind, jedoch sind diese Merkmale besonders prominente bevorzugte Realisierungen der beanspruchten Erfindung, können mit jedem der Patentansprüche kombiniert werden und können auch untereinander beliebig kombiniert werden.

### KURZBESCHREIBUNG DER FIGUREN

Figur 1A zeigt einen schematischen Querschnitt durch eine erfindungsgemäße nach innen gerichtete, passive pneumatische Klemm- und/oder Bremsvorrichtung im geschlossenen Zustand.
Figur 1B zeigt einen schematischen Querschnitt durch eine erfindungsgemäße nach außen gerichtete, passive pneumatische Klemm- und/oder Bremsvorrichtung im geschlossenen Zustand.
Figur 2A zeigt einen schematischen Querschnitt durch eine erfindungsgemäße nach innen gerichtete, passive pneumatische Klemm- und/oder Bremsvorrichtung im offenen Zustand.
Figur 2B zeigt einen schematischen Querschnitt durch eine erfindungsgemäße nach außen gerichtete, passive pneumatische Klemm- und/oder Bremsvorrichtung im offenen Zustand.
Figur 3A zeigt einen schematischen Querschnitt durch eine erfindungsgemäße nach innen gerichtete, aktive pneumatische Klemm- und/oder Bremsvorrichtung im offenen Zustand.
Figur 3B zeigt einen schematischen Querschnitt durch eine erfindungsgemäße nach außen gerichtete, aktive pneumatische Klemm- und/oder Bremsvorrichtung im offenen Zustand.
Figur 4A zeigt einen schematischen Querschnitt durch eine erfindungsgemäße nach innen gerichtete, aktive pneumatische Klemm- und/oder Bremsvorrichtung im geschlossenen Zustand.
Figur 4B zeigt einen schematischen Querschnitt durch eine erfindungsgemäße nach außen gerichtete, aktive pneumatische Klemm- und/oder Bremsvorrichtung im geschlossenen Zustand.
Figur 5A zeigt einen Querschnitt durch eine pneumatische Klemm- und/oder Bremsvorrichtung in dreidimensionaler Darstellung nach dem Stand der Technik.
Figuren 5B bis 5D zeigen eine Variante eines aus Figur 5A entnommenen Gehäuseteils nach dem Stand der Technik.
Figur 6 zeigt einen Querschnitt durch eine pneumatische Klemm- und/oder Bremsvorrichtung in zweidimensionaler Darstellung nach dem Stand der Technik.
Figur 7A zeigt einen Querschnitt durch eine bevorzugte Ausführungsform des erfindungsgemäßen Gehäuseteils in zweidimensionaler Darstellung.
Figur 7B zeigt eine Nahaufnahme des Bereiches Z im Querschnitt des erfindungsgemäßen Gehäuseteils nach Figur 7A.
Figuren 8A und 8B zeigen bevorzugte Ausführungsformen des erfindungsgemäßen Gehäuseteils.
Figur 9 zeigt eine bevorzugte Ausführungsformen des erfindungsgemäßen Gehäuseteils, in der die in der Figur 8B gezeigte Verjüngung realisiert ist.
Figuren 10A und 10B zeigen bevorzugte erfindungsgemäße Abdeckungen für Ausführungsformen des erfindungsgemäßen Gehäuseteils. Die Abdeckungen dienen dem Abdecken der Gehäuseteile und dem Abdichten der Gehäuseteile, insb. des betreffenden Druckraumes, gegenüber Druckmedium.
Figur 11 zeigt eine bevorzugte Ausführungsform der erfindungsgemäßen Klemm- und/oder Bremsvorrichtung, in der die in den Figuren 7A und 7B gezeigte Ausführungsform des erfindungsgemäßen Gehäuseteils und die in Figur 10A gezeigte bevorzugte Abdeckung realisiert sind.
Figur 12 zeigt ein Tandem der bevorzugten Ausführungsform der erfindungsgemäßen Klemm- und/oder Bremsvorrichtung, in der die in den Figuren 7A und 7B gezeigte Ausführungsform des erfindungsgemäßen Gehäuseteils und die in Figur 10A und 10B gezeigten bevorzugten Abdeckungen realisiert sind. Optional kann zusätzlich die in den Figuren 8A und 8B gezeigte Verjüngung realisiert sein.
Figur 13 zeigt ein Tridem der bevorzugten Ausführungsform der erfindungsgemäßen Klemm- und/oder Bremsvorrichtung, in der die in den Figuren 7A und 7B gezeigte Ausführungsform des erfindungsgemäßen Gehäuseteils und die in Figur 10A und 10B gezeigten bevorzugten Abdeckungen realisiert sind. Optional kann zusätzlich die in den Figuren 8A und 8B gezeigte Verjüngung realisiert sein.
Figur 14 zeigt ein Tandem der bevorzugten Ausführungsform der erfindungsgemäßen Klemm- und/oder Bremsvorrichtung, in der die in der Figur 9 gezeigte Ausführungsform des erfindungsgemäßen Gehäuseteils (mit oder ohne Verjüngung aus Figuren 8A und 8B) realisiert ist und in der die in Figur 6 gezeigten Gehäuseteile aus dem Stand der Technik als Abdeckungen realisiert sind.
Figur 15 zeigt ein Tridem der bevorzugten Ausführungsform der erfindungsgemäßen Klemm- und/oder Bremsvorrichtung, in der die in der Figur 9 gezeigte Ausführungsform des erfindungsgemäßen Gehäuseteils (mit oder ohne Verjüngung aus Figuren 8A und 8B) realisiert ist und in der die in Figur 6 gezeigten Gehäuseteile aus dem Stand der Technik als Abdeckungen realisiert sind.

Bauteile, die in mehreren Figuren dargestellt sind, tragen dieselben Referenzzeichen.

### DETAILLIERTE BESCHREIBUNG

Die Erfindung betrifft ein Gehäuseteil für eine pneumatische Klemm- und/oder Bremsvorrichtung und eine pneumatische Klemm- und/oder Bremsvorrichtung mit einem erfindungsgemäßen Gehäuseteil. Die Erfindung betrifft auch die Verwendung dieses Gehäuseteils bzw. dieser Vorrichtung zum Klemmen und/oder Bremsen eines Objekts, insbesondere einer routinebaren Welle.

Wenn in diesem Dokument von der Vorrichtung "Klemme" oder "Klemmvorrichtung", der "Klemmkraft" oder dem Vorgang des "Klemmens" gesprochen wird, dann ist gleichermaßen auch die Vorrichtung der "Bremse" oder "Bremsvorrichtung" bzw. die "Bremskraft" bzw. der Vorgang des "Bremsens" umfasst.

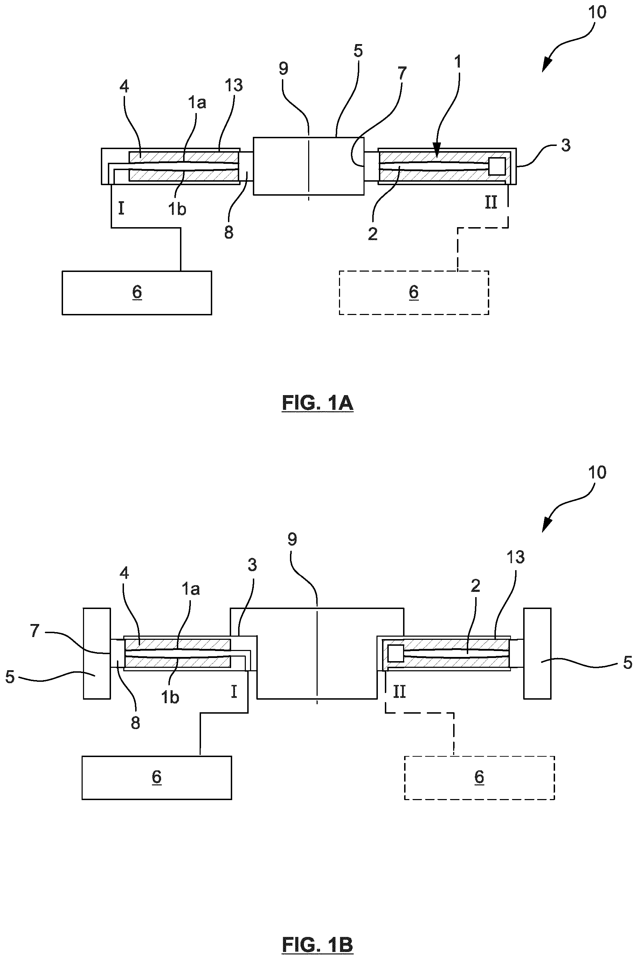

Die Figuren 1A bis 4B zeigen schematisch Querschnitte durch eine solche erfindungsgemäße pneumatische Klemmvorrichtung 10 mit einem Gehäuse 3, sowie mit einer in dem Gehäuse 3 angeordneten Feder 1, die mindestens zwei ringförmige Federplatten 1a, 1b umfasst.

Die erfindungsgemäße Klemmvorrichtung 10 umfasst einen Innenraum 13 innerhalb des Gehäuses 3, wobei der Innenraum 13 die darin im Gehäuse 3 eingeklemmte Feder 1 umfasst, welche Feder 1 eine erste eingeklemmte ringförmige Federplatte 1a und eine zweite eingeklemmte ringförmige Federplatte 1b umfasst, wobei die Federplatten 1a, 1b derart am Gehäuse 3 einklemmt sind, so dass in dem Innenraum 13 mindestens ein Druckraum 2, 4 gebildet wird, der zumindest teilweise durch die Federplatten 1a, 1b begrenzt wird, wobei der Druckraum 2, 4 be- oder entlüftbar ist und mit Überdruck eines dem Gehäuse 3 zuführbaren Druckmediums beaufschlagbar ist, und wobei die Federplatten 1a, 1b derart relativ zu den mindestens einen Druckraum 2, 4 angeordnet sind, dass durch Be- oder Entlüften des Druckraums 2, 4 oder Beaufschlagung des Druckraum 2, 4 mit Überdruck, eine Biegung mindestens einer der Federplatten 1a, 1b veränderbar ist und dadurch die Klemm- und/oder Bremsvorrichtung 10 zwischen einem geöffneten Zustand, in dem ein zu klemmendes und/oder zu bremsendes Objekt 5 von ein oder mehreren Klemmflächen 7 eines Klemmelements 8 beabstandet ist, und einem geschlossenen Zustand, in dem ein oder mehrere der Klemmflächen 7 eine Klemm- und/oder Bremskraft auf das Objekt 5 übertragen, wechselt.

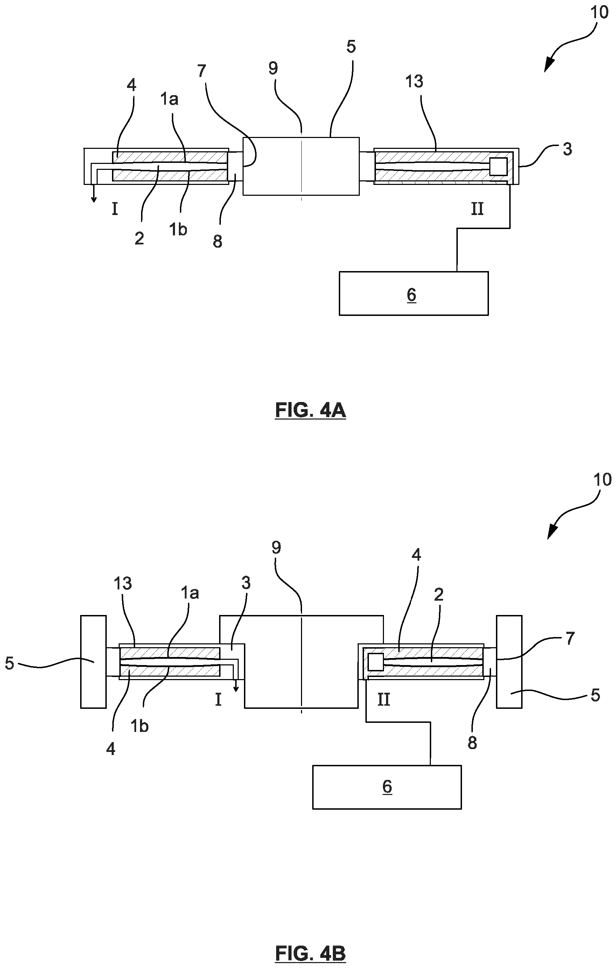

Die Figuren 1A, 1B, 4A und 4B zeigen jeweils solche Klemmvorrichtungen 10 im geschlossenen Zustand indem die Klemmfläche 7 des Klemmelements 8 den Umfang des Objekts 5 berührt. Das Klemmelement 8 wird auch als Klemmlippe bezeichnet. Das Klemmelement 8 kann einstückig mit den Übrigen Teilen des Gehäuses 3 ausgebildet sein oder kann ein von den übrigen Teilen strukturell separiertes Bauteil des Gehäuses 3 sein.

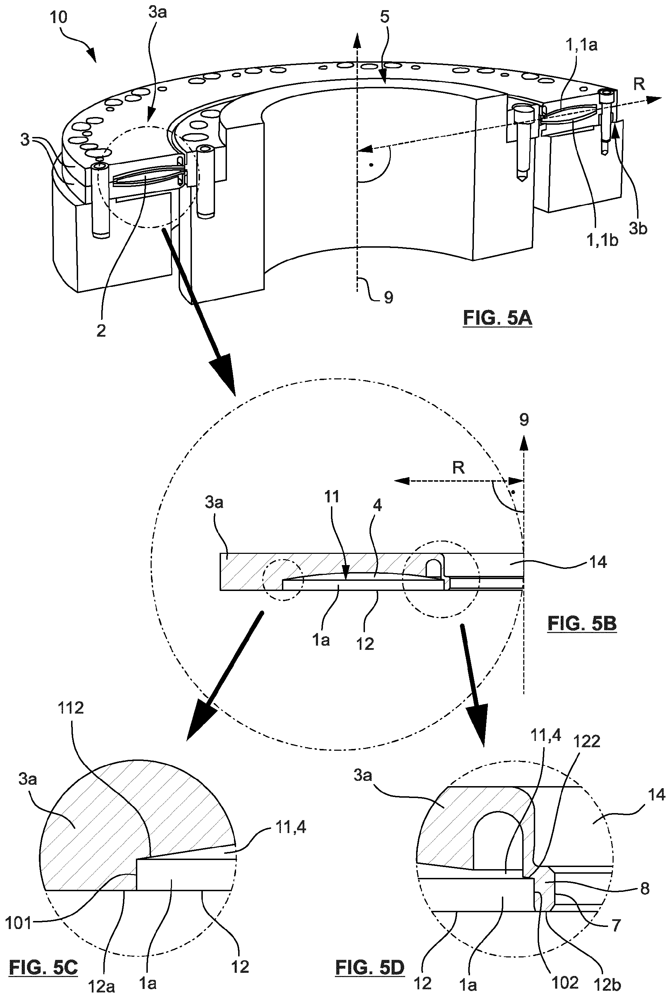

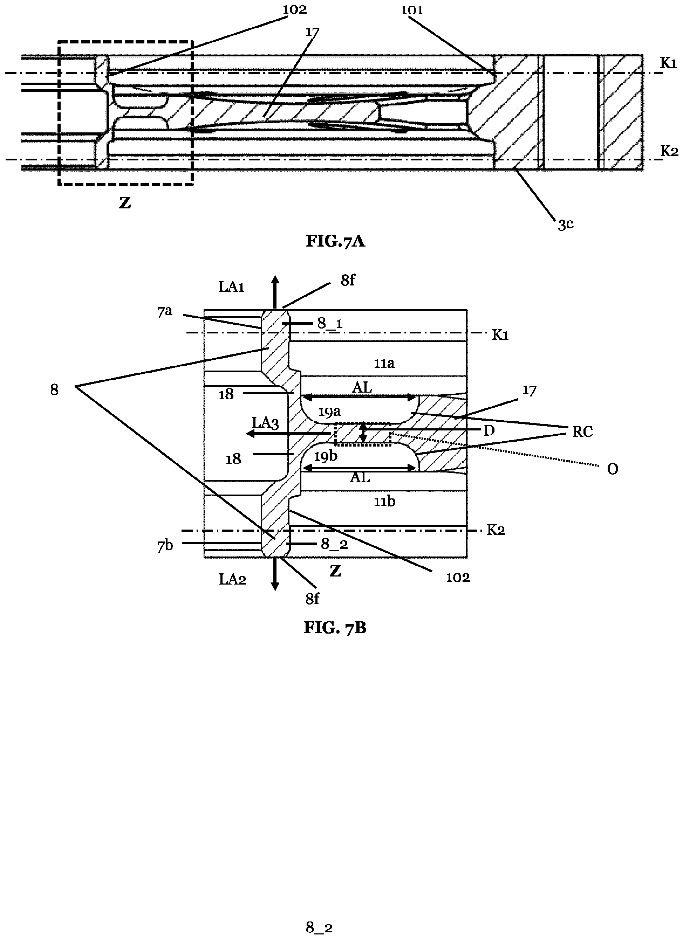

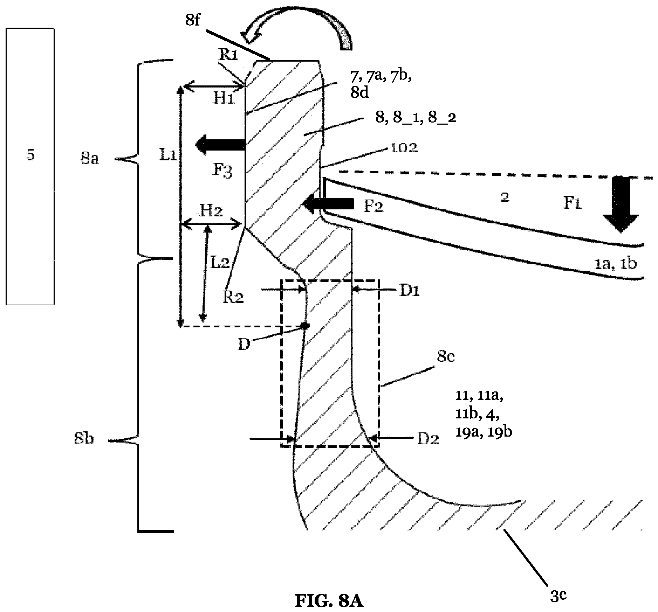

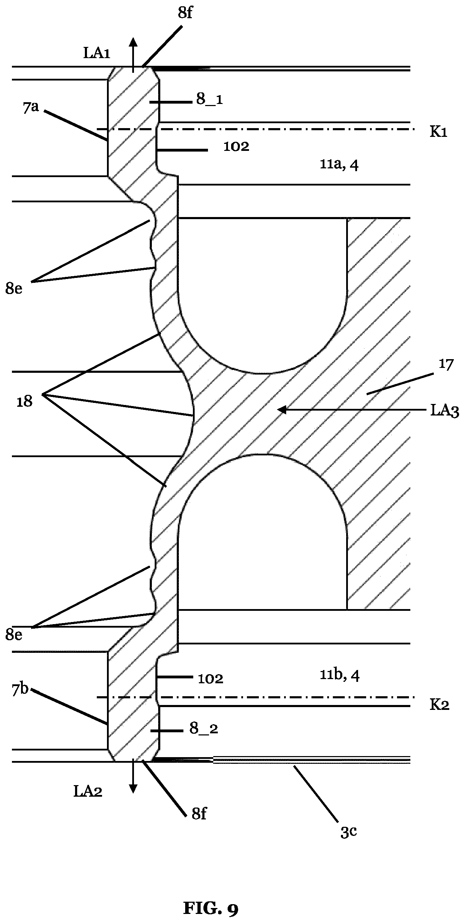

Die Klemmkraft F3 (vgl. Fig. 8A) bzw. Klemmwirkung der Klemmfläche 7 auf das zu klemmende Objekt 5 erfolgt in einer Klemmebene (vgl. K1, K2 in Fig. 7B, 9), die durch zwei Vektoren aufgespannt wird, die jeweils einen Radius R (vgl. Fig. 5A )der ringförmigen Federplatten 1a, 1b bzw. ringförmigen Aussparung 11 bilden. Die Achse 9 kann als Hauptachse der Klemmvorrichtung 10 bezeichnet werden, die senkrecht zur Klemmebene verläuft. Die Klemmvorrichtung 10 kann um diese Hauptachse 9 rotationssymmetrisch ausgestaltet sein. Die Hauptachse 9 kann in etwa oder genau mittig durch eine Öffnung der Klemmvorrichtung 10 verlaufen (Öffnung 14 in Fig. 5B). In den Figuren 1A, 4A ist das zu klemmende Objekt 5, beispielsweise eine rotierbare Welle einer Maschine oder eines Tischs, innerhalb der Öffnung 14 platziert und die Klemmkraft der Klemmvorrichtung ist deshalb innerhalb der Klemmebene radial nach innen zur Hauptachse 9 hin (senkrecht zur Hauptachse 9) gerichtet. In Figuren 1B, 4B ist das zu klemmende Objekt 5 außerhalb der Klemmvorrichtung 10 platziert und die Klemmkraft der Klemmvorrichtung ist deshalb innerhalb der Klemmebene radial nach außen von der Hauptachse 9 weg (senkrecht zur Hauptachse 9) gerichtet.

In Fig. 1A, 2A, 3A, 4A befindet sich das Klemmelement 8 zwischen Feder 1 und Öffnung 14 bzw. Hauptachse 9. In Fig. 1B, 2B, 3B, 4B hingegen umgibt das zu klemmende Objekt 5 zumindest teilweise die Klemmvorrichtung 10, sodass sich dort das Klemmelement 8 zwischen Objekt 5 und Öffnung 14 bzw. Hauptachse 9 befindet. In Fig. 1B, 2B, 3B, 4B kann in Öffnung 14 statt dem zu klemmenden Objekt 5 ein die Öffnung 14 zumindest teilweise füllendes Bauteil eingebracht sein, durch das sich die Hauptachse 9 erstreckt.

In Figuren 1A bis 5A ist jeweils die Feder 1 zwischen zwei Anlageflächen (101 und 102 in Fig. 5C und 5D) innerhalb des Gehäuses 3 der Klemmvorrichtungen 10 eingeklemmt und erstreckt sich zwischen den beiden Anlageflächen. Im drucklosen Ausgangszustand der Vorrichtung 10 in den Figuren 1A bis 2B kann die Feder 1 leicht gebogen sein, um in diesem Zustand fest im Gehäuse 3 fixiert zu sein und dasselbe kann für jeden anderen Zustand der Vorrichtung 10 gelten, wobei der Grad der Biegung der Feder 1 davon abhängt, in welchem Zustand sich die Vorrichtung 10 befindet. Ist die Vorrichtung 10 in einem Zustand, in dem die Feder 1 gebogen ist (z.B. stärker gebogen als im drucklosen Ausgangszustand, wie etwa im geöffneten Zustand), kann Entlüften eines inneren Druckraums 2 der Feder 1 und Belüftung eines äußeren Druckraums 4 zum zumindest teilweisen Entspannen der Feder 1 führen während die Feder 1 an die radialen Anlageflächen drückt, deren Abstand sich etwas vergrößert, so dass dadurch das Gehäuse 3 im Bereich des Klemmelements 8 bzw. der Klemmfläche 7 elastisch verformt wird und die Klemmfläche 7 dadurch das Objekt 5 berührt und mit einer (vordefinierten) Klemmkraft gegen das Objekt 5 gedrückt wird, um das Objekt 5 festzuklemmen. Das Objekt 5 ist festgeklemmt und die Klemmvorrichtung 10 ist im geschlossenen Zustand, wie in Figuren 1A und 1B gezeigt. Im geschlossenen Zustand der Vorrichtung 10 kann die Feder 1 auch nach der teilweisen Entspannung immer noch leicht gebogen sein, um in diesem Zustand fest im Gehäuse 3 fixiert zu sein.

Das Klemmelement 8 kann dabei ein elastisches Element, wie etwa eine Federgabel, sein, das im drucklosen Ausgangszustand der Vorrichtung 10 durch die Federkraft F2 (vgl. Fig. 8A) der (leicht) verbogenen Feder 1 aus einer Ausgangsposition, in der das elastische Element entspannt ist, in eine verspannte Position gebracht wird, beispielsweise durch Verbiegen der Federgabel (Klemmelement 8), bis im drucklosen Ausgangszustand ein Gleichgewicht zwischen einer Rückstellkraft des elastischen Klemmelements 8 und der Federkraft der Feder 1 entsteht. Bei diesem Gleichgewicht kann beispielsweise die Klemmfläche 7 gegen das Objekt 5 mit der Klemmkraft F3 drücken.

Durch zusätzliche Beaufschlagung des äußeren Druckraums 4 im geschlossenen Zustand mit Druckluft (beispielsweise mit 4 bar oder 6 bar) besteht die optionale Möglichkeit die Klemmkraft um einen vorbestimmten Wert zu erhöhen. Dies ist in den Figuren 1A, 1B durch die optionale zusätzliche Druckluftpumpe (Booster) 6 und die Schraffierung (Druckluft) im äußeren Druckraum 4 angedeutet. Der äußere Druckraum 4 kann mittels einer Öffnung im Gehäuse 3 mit einem Luftanschluss II (auch als "Close" bezeichnet) verbunden sein, an dem die Druckluftpumpe 6 angeschlossen sein kann.

Hierdurch ist z.B. ein Ansteuern der Vorrichtung 10 derart möglich, dass ein Wechsel zwischen einer (im drucklosen Zustand) gebremsten Bewegung des beaufschlagten Objekts 5 und einem vollständigen Klemmen des Objekts (bei einer ausreichenden Druckbeaufschlagung) erfolgt.

Auch wenn hier beispielhaft zwei Druckräume 2, 4 gezeigt und beschrieben sind, so ist die Klemmvorrichtung 10 auch mit einem einzigen Druckraum betreibbar, der beispielsweise der innere Druckraum 2 oder der äußere Druckraum 4 sein kann.

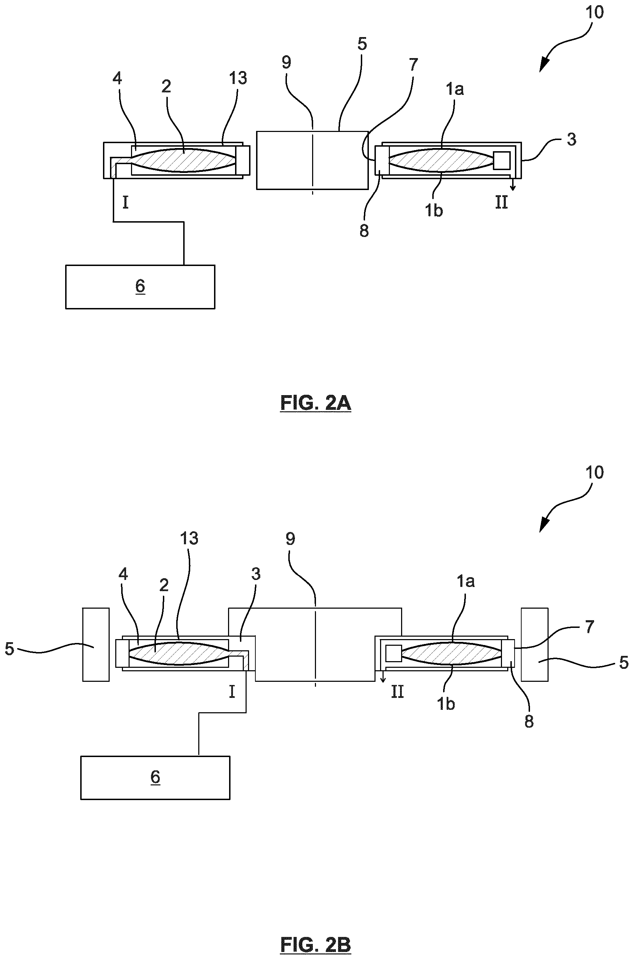

Figuren 2A und 2B zeigen die Klemmvorrichtungen 10 aus den Figuren 1A und 1B jeweils im geöffneten Zustand in dem die Klemmfläche 7 den Umfang des Objekts 5 nicht berührt bzw. von dem Umfang des Objekts beabstandet ist. Der innere Druckraum 2 kann mittels einer Öffnung im Gehäuse 3 mit einem Luftanschluss I (auch als "Open" bezeichnet) verbunden sein, an dem eine Druckluftpumpe 6 angeschlossen sein kann.

Durch Beaufschlagung des inneren Druckraums 2 durch die Druckluftpumpe 6 mit Druckluft (beispielsweise 4 bar oder 6 bar) und Entlüften des äußeren Druckraums 4 wird die Feder 1, verglichen mit dem geschlossenen Zustand aus Fig. 1A, 1B, stärker (konvex) verbogenen bzw. verspannt und es kommt zu einer radialen Verkürzung der Feder 1 bzw. des Abstandes zwischen den beiden Anlageflächen. Die Klemmfläche 7 hebt von dem Objekt 5 ab, um die Klemmung aufzuheben. Das Objekt 5 ist frei beweglich (z.B. um Achse 9 rotierbar oder linear entlang Achse 9 beweglich) und die Klemmvorrichtung 10 ist geöffnet.

Zwischen dem geschlossenen Zustand und dem geöffneten Zustand der Vorrichtung 10 kann hin- und her gewechselt werden.

Solche pneumatischen Klemmen 10 haben gegenüber hydraulischen Klemmen einer Reihe von Vorteilen.

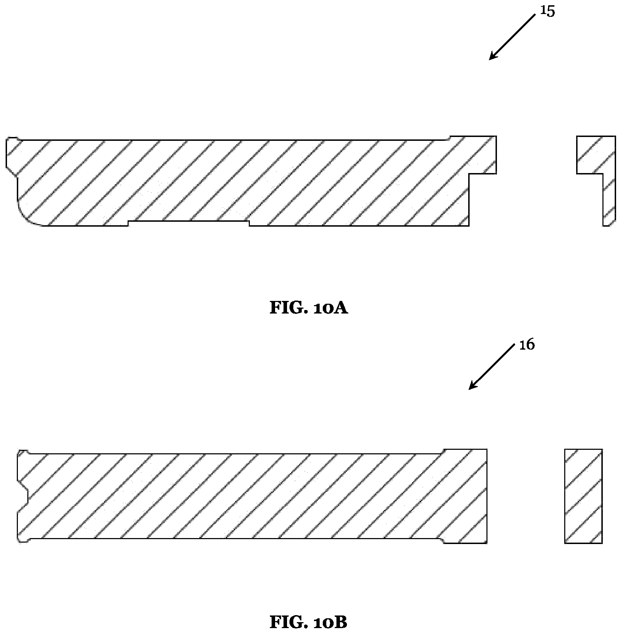

Durch die Verwendung der Kombination aus elastischer Komponente, hier eine Feder 1 samt Federplatten 1a, 1b, und Druckluft werden beispielsweise sehr kurze Reaktionszeiten beim Umschalten zwischen dem geöffneten und geschlossenen Zustand erreicht und ebenso eine sichere Klemmung des Objekts 5 bewirkt. Die Feder 1 kann bevorzugt plattenförmig ausgestaltet sein, wie in Fig. 10 näher gezeigt, wobei zwei aufeinanderliegende Federplatten 1a, 1b die Feder 1 und den inneren Druckraum 2 der Feder 1 zwischen den Platten 1a, 1b bilden (vgl. Fig. 1). Die Platten 1a, 1b können ebenfalls ringförmig sein, wie in Fig. 5 gezeigt, und können optional zusätzlich radiale Schlitze aufweisen, so dass eine Veränderung des Innendurchmessers mit besonders geringen Kräften möglich ist. Die Federplatten 1a, 1b können, zumindest im Bereich von Schlitzen, mit Gummi beschichtet sein, um die für die Druckluft nötige Dichtheit herzustellen. Die Federplatten 1a, 1b können auch vollständig mit Gummi ummantelt sein. Die Federplatten 1a, 1b sind generell so druckfest und so elastisch biegbar ausgebildet und in dem Gehäuse 3 der Klemmvorrichtung 10 derart angeordnet, dass innerhalb der Feder 1 zwischen den Federplatten 1a, 1b der innere Druckraum 2 gebildet wird und zwischen einer jeden Federplatte 1a, 1b und dem Gehäuse 3 der Klemmvorrichtung 10 der äußere Druckraum 4 gebildet wird.

Durch Belüften oder Beaufschlagen mit Druckluft des äußeren Druckraums 4 und Entlüften des inneren Druckraums 2, wie in Fig. 1A gezeigt, wird die Feder 1 zumindest teilweise entspannt und bewirkt eine Klemmkraft auf das zu klemmende Objekt 5, insbesondere auf den Umfang einer Welle 5. Dadurch wird bei Energie- bzw. Druckausfall das Objekt 5 geklemmt bzw. die Welle 5 sofort zum Stillstand gebracht und bietet deshalb eine Sicherheitsklemmung. Solche pneumatischen Klemmen 10 können je nach Größe Haltemomente von mehreren 100 Nm und bis zu mehreren 1000 Nm erzielen, die durch zusätzliches Beaufschlagen des äußeren Druckraums 4 mit Druckluft, wie in Fig. 1A durch eine Druckpumpe 6 (Booster) angedeutet, noch erhöht werden können. Hier genügt eine Druckluft von wenigen bar (beispielsweise 4 bar oder 6 bar) für eine Bereitstellung eines Mehrfachen der Haltemomente, die ohne Booster erreicht werden. Dabei wird die Tatsache genutzt, dass geringe transversale Verbiegungen der Platten 1a, 1b (senkrecht zu deren Längsachse) beim Umschalten zwischen geöffneten und geschlossenen Zustand der Klemme 10 große Federkräfte erzeugen, die zum Klemmen oder zum Lösen vorgespannter Klemmvorrichtungen 10 genutzt werden können. Somit wird ein sicheres Klemmen und Lösen auch von sich schnell drehenden Maschinenwellen 5 ermöglicht.

Auch sind bei Pneumatikmaterial die Kosten und der Montageaufwand im Vergleich zur Hydraulikmaterial niedriger und es entsteht durch Verwendung von Druckluft keinerlei Mehraufwand zur Herstellung von Sauberkeit an der Anlage. Auch ermöglichen solche pneumatischen Klemmen eine geringe Baugröße, da eine geringe transversale Verbiegung und eine geringe (Änderungen der) longitudinale Ausdehnung der Feder, und dadurch geringe Volumina der Druckräume, genügen, um die erforderlichen Klemmkräfte aufzubringen.

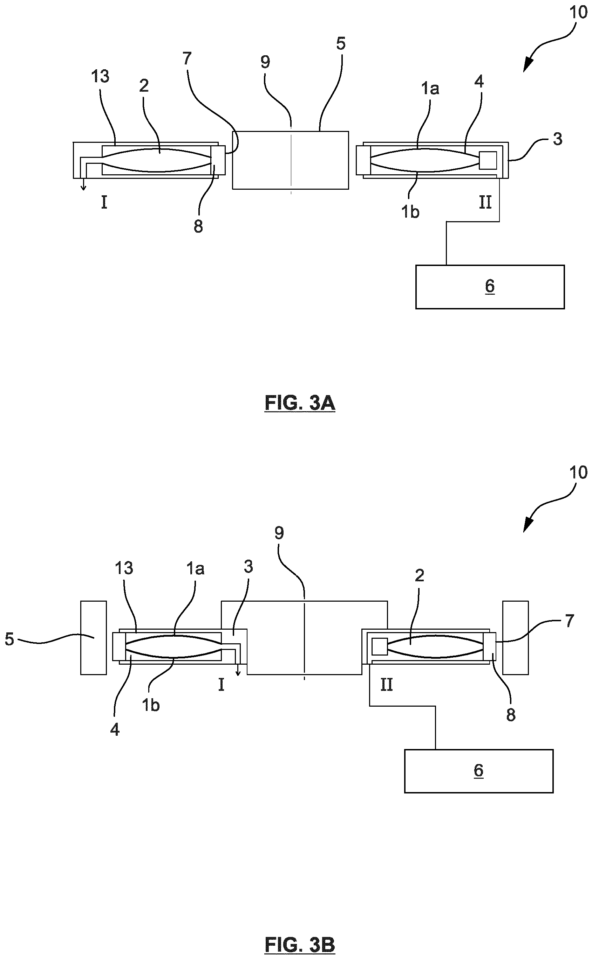

Bei pneumatischen Klemmen unterscheidet man prinzipiell zwischen passiven Klemmvorrichtungen 10, wie in Fig. 1A bis 2B gezeigt, und aktiven Klemmvorrichtungen 10, wie in Fig. 3A bis 4B gezeigt.

Die Feder 1 kann im drucklosen Ausgangszustand unterschiedlich stark (transversal) verbogen sein und damit unterschiedlich stark radial verkürzt sein. Die Innenseite des Gehäuses 3 kann an die Verbiegung der Federplatten 1a, 1b angepasst sein oder diese definieren. Eine entsprechende Anschlagsfläche für die Federplatten 1a, 1b kann beispielsweise durch eine Gehäuseinnenwandung gebildet werden. Die Gehäuseinnenwandung kann komplementär (z.B. konkav) zu einer (z.B. konvexen) Verbiegung der Federplatten 1a, 1b ausgebildet sein. Bei passiven Klemmvorrichtungen 10 wird im drucklosen Ausgangszustand die Feder 1 in der Regel leicht elastisch (z.B. konvex) verbogen bzw. ist vorgespannt und die Klemmvorrichtungen 10 kann geschlossen sein (Fig. 1A, 1B). Die Klemmvorrichtung 10 wird nur durch Krafteinwirkung von Innen über Beaufschlagung des inneren Druckraums 2 mit Druckluft geöffnet (Fig. 2A, 2B). Meist ist die Feder 1 im drucklosen Ausgangszustand etwas verbogen, so dass diese im Klemmfall oder im Fall von Druckabfall die durch die in der Feder 1 gespeicherte Energie gegebene Federkraft auf das zu klemmende Objekt 5 als Klemmkraft übertragen wird, um das Objekt 5 zu klemmen.

Bei aktiven Klemmvorrichtungen 10 wird im drucklosen Ausgangszustand (Fig. 3A, 3B) die Feder 1 stärker, insbesondere stärker konvex, transversal nach außen gekrümmt als bei passiven Klemmvorrichtungen, so dass sich der Abstand zwischen den beiden radialen Anlageflächen verkürzt und die Klemmvorrichtung 10 geöffnet ist. Es wird keine Klemmkraft über Klemmfläche 7 auf das Objekt 5 bewirkt. Das Objekt ist frei, da die Klemmfläche 7 das Objekt 5 nicht berührt bzw. von dem Objekt 5 beabstandet ist.

Durch plastische Verformung der Federplatten 1a, 1b kann die Feder 1 bei gleichem Gehäuse 3 im drucklosen Ausgangszustand stärker transversal nach außen gekrümmt und damit stärker radial verkürzt sein, als bei passiven Klemmvorrichtungen. Diese geringere radiale Ausdehnung der Federplatten 1a, 1b im drucklosen Ausgangszustand kann zu einem geöffneten Zustand der Klemmvorrichtung 10 im drucklosen Ausgangszustand führen. Auch bei plastischer Verformung sind die Federplatten 1a, 1b elastisch gebogen und drücken gegen die Anlageflächen damit die Feder im Gehäuse fixiert ist. Der Innenraum des Gehäuses bzw. die Aussparungen können die durch plastische Verformung stärker bewirkte Krümmung im Ausgangszustand aufnehmen.

Die Klemmkraft muss nun aktiv von außen induziert werden, wie in Fig. 4A und 4B gezeigt, um die Klemme in den geschlossenen Zustand zu überführen. Hier wird durch eine Druckluftpumpe 6 Druckluft in den äußeren Druckraum 4 eingebracht und somit die Feder 1 derart von außen mit Druckluft beaufschlagt, dass die Feder 1 aktiv entspannt wird, sich die Krümmung der Feder 1 reduziert, sich der Abstand zwischen den beiden Anlageflächen vergrößert, und sich das Gehäuse 3 im Bereich des Klemmelements 8 bzw. der Klemmfläche 7 elastisch verformt, sodass die Klemmfläche 7 das Objekt 5 berührt und eine Klemmkraft auf das Objekt 5 bewirkt und das Objekt 5 dadurch festgeklemmt wird. Die aktive Klemmvorrichtung 10 ist dann im geschlossenen Zustand.

Je nach Anwendungsgebiet und vorgeschriebenen Sicherheitsbestimmungen wird daher auf ein Aktiv- oder Passivklemmsystem 10 zurückgegriffen. Ist primär eine Sicherheitsklemmung gewünscht, wird in der Regel eine passive Klemmvorrichtung verwendet. Mit solchen pneumatischen Passivklemmsystemen ist es möglich, bereits im drucklosen Zustand bei einer entsprechenden Montage der Vorrichtung in einer Gesamtvorrichtung eine vorbestimmte Klemmkraft zu erzeugen, mit welcher das zu klemmende Objekt 5 beaufschlagt wird. Durch die Beaufschlagung mit Überdruck oder Unterdruck können die auf dieses Objekt übertragenen Kräfte erhöht, reduziert oder ganz aufgehoben werden, was vielfältige Anwendungen eröffnet. Soll hingegen mit der Klemmvorrichtung primär ein bewusster Arbeitsvorgang, wie ein Werkzeugwechsel, durchgeführt werden, wird in der Regel eine aktive Klemmvorrichtung verwendet.

Wie in Figuren 5A bis 5D dargestellt, umfasst das Gehäuse 3 der bekannten Klemmvorrichtungen 10 zwei Gehäuseteilen 3a, 3b (mit jeweils einer Federplatte 1a, 1b), die vorzugsweise mit Befestigungsmittel, wie etwa Schrauben, miteinander befestigt und so montiert sind, dass im montierten Zustand die beiden Gehäuseteile 3a, 3b einen Innenraum 13 zwischen den Gehäuseteilen 3a, 3b innerhalb des Gehäuses 3 definieren in dem die Feder 1 samt deren ringförmiger Federplatten 1a, 1b angeordnet sind.

Jedes der Gehäuseteile 3a, 3b umfasst: eine ringförmige Aussparung 11 zum Einklemmen einer ringförmigen Federplatte 1a, 1b zwischen einer durch die Aussparung 11 definierten ersten Anlagefläche 101 des Gehäuseteils 3a, 3b und einer durch die Aussparung 11 definierten zweiten Anlagefläche 102 des Gehäuseteils 3a, 3b; ein Klemmelement 8 mit einer Klemmfläche 7, wobei das Klemmelement 8 ausgelegt ist, wenn die Federplatte 1a, 1b derart in der Aussparung 11 zwischen der ersten Anlagefläche 101 und der zweiten Anlagefläche 102 eingeklemmt ist, dass sich ein erstes Ende der Federplatte 1a, 1b an der ersten Anlagefläche 101 abstützt, sich die Federplatte 1a, 1b von der ersten Anlagefläche 101 bis zu der zweiten Anlagefläche 102 erstreckt, und ein zweites Ende der Federplatte 1a, 1b auf die zweite Anlagefläche 102 drückt, eine Klemm- und/oder Bremskraft auf ein zu klemmendes und/oder zu bremsendes Objekt 5 über die Klemmfläche 7 zu übertragen.

Zumindest ein Teil der ersten Anlagefläche 101 kann (im Wesentlichen) senkrecht zur radialen Richtung R der ringförmigen Aussparung 11 verlaufen und/oder ein Teil der zweiten Anlagefläche 102 kann (im Wesentlichen senkrecht) zur radialen Richtung R der ringförmigen Aussparung 11 verlaufen.

Durch die Mitte des Gehäuses 3 hindurch erstreckt sich eine Öffnung 14 (Fg. 5B) in die das zu klemmende Objekt 5, wie etwa eine Welle, eingeführt werden kann. Das Gehäuse kann sich bis zu 360° um diese Öffnung herum erstrecken und umschließt zumindest teilweise das Objekt 5 in zumindest einer Ebene die als Klemmebene bezeichnet wird. Die zentrale Hauptachse 9 der Klemmvorrichtungen verläuft mittig durch die Öffnung 14 und senkrecht zu der Klemmebene. In Klemmvorrichtungen nach Fig. 1A, 2A, 3A, 4A, 5A verläuft die Hauptachse 9 mittig durch die Welle entlang deren Längsachse.

Entlang des Umfangs des Gehäuses 3 oder der Öffnung 14 befindet sich eine oder mehrere der Klemmflächen 7 welche im Falle einer elastischen Verformung des Gehäuses 3 im Bereich des Klemmelements 8 oder der Klemmfläche 7 die Klemmkraft auf den äußeren Umfang des Objekts 5 bewirkt und dadurch das Objekt 5 klemmen kann. Für eine wirksame Öffnung und Schließung der Klemmvorrichtung 10 im Bezug auf das zu klemmende Objekt 5, ohne Gefahr der Beschädigung des Objekts 5, ist eine symmetrische Verteilung der Klemmkraft entlang der Klemmfläche 7 bzw. entlang des Umfangs des Objekts 5 wünschenswert. Eine nicht symmetrische Verteilung der Klemmkraft kann zu Beschädigungen des Objekts 5 führen. Vorzugsweise sind eine oder beide Anlageflächen 101, 102 innerhalb der Klemmebene kreisförmig ausgestaltet. Vorzugsweise ist die Klemmfläche 7 innerhalb der Klemmebene kreisförmig ausgestaltet. Das Klemmelement 8 kann ringförmig ausgestaltet sein. Alle hierin beschriebenen ring- oder kreisförmigen Bauteile können jeweils einzeln oder in Kombination als Mittelpunkt den Schnittpunkt der Hauptachse 9 mit der Klemmebene aufweisen (z.B. Mittelpunkt der Öffnung 14).

Figur 5B zeigt eines der beiden Gehäuseteile 3a (hier das obere Gehäuseteil 3a aus Fig. 5A), sowie eine der beiden Federplatten 1a, 1b der Feder 1. Die dargestellte Federplatte 1a der Feder 1 erstreckt sich von einer ersten Anlageflächen 101 innerhalb des Gehäuseteils 3a bis zu einer zweiten Anlagefläche 102 innerhalb des Gehäuseteils 3a und kann diese berühren. Die erste Anlagefläche 101 ist dabei vom Mittelpunkt der Öffnung 14 ausgesehen radial weiter außerhalb angeordnet als die zweite Anlagefläche 102.

Figur 5C zeigt den Abschnitt des in Figur 5B dargestellten Gehäuseteils 3a in dem die obere Platte 1a der Feder 1 auf die erste Anlagefläche 101 trifft und mit dieser vorzugsweise in Berührung steht. Figur 5D zeigt den Abschnitt des in Figur 5B dargestellten Gehäuseteils 3a in dem die obere Platte 1a der Feder 1 auf die zweite Anlagefläche 102 trifft und mit dieser vorzugsweise in Berührung steht. Es ist jedoch auch möglich, dass sich radial zwischen der Federplatte 1a und ein oder mehreren der Anlageflächen 101, 102 jeweils ein oder mehrere weitere Komponenten befinden, über die die Federplatte 1a ihre Federkraft auf die Anlageflächen 101, 102 ausübt.

Wie in Figuren 5B, 5D ersichtlich, können die Innenseiten des Gehäuseteils 3a zwischen denen die Federplatte 1a in der Aussparung eingeklemmt wird geradlinig bzw. eben ausgestaltet sein. Jede der Platten der Feder 1 wird in Richtung der Hauptachse 9 der Klemmvorrichtungen 10 durch die Öffnung 12 in die Aussparung 11 des jeweils dazugehörigen Gehäuseteils bei der Montage an geradlinigen bzw. ebenen Innenflächen des Gehäuseteils 3a entlang eingeführt, bis die jeweilige Federplatte am Ende jeder der beiden Anlageflächen 101, 102 an einen Anschlag 112, 122 stößt und deshalb nicht weiter in die Aussparung 11 eingeführt werden kann. Da die Ausdehnung der Federplatte 1a in der Klemmebene bzw. in radialer Richtung der ringförmigen Aussparung größer ist als die Ausdehnung des durch das Gehäuseteil definierten Innenraums wird die Federplatte 1a im drucklosen Ausgangszustand verbogen bzw. vorgespannt.

Wie in Figur 6 dargestellt, umfasst das Gehäuse der bekannten Klemmvorrichtungen zwei Gehäuseteilen 3a, 3b (mit jeweils einer Federplatte 1a, 1b), die vorzugsweise mit Befestigungsmittel, wie etwa Schrauben, miteinander befestigt und so montiert sind, dass im montierten Zustand die beiden Gehäuseteile 3a, 3b einen Innenraum zwischen den Gehäuseteilen 3a, 3b innerhalb des Gehäuses definieren in dem die Feder samt deren ringförmiger Federplatten 1a, 1b angeordnet sind. Durch diese Montage bei der die Endflächen der Klemmelemente 8 aneinander zugewandt und aneinander angrenzend angeordnet sind entsteht die in der Figur 6 gezeigten Axialkraft F_ax, die einen Widerstand für die Bewegung der Federplatten 1a, 1b bei deren radialen Bewegung darstellt und daher nachteilig für eine effiziente Übertragung der Klemmkraft auf das zu klemmende Objekt ist.

Diese axiale Kraft kann durch die im Folgenden näher beschriebenen Maßnahmen eliminiert werden, was den Gehäusewiderstand reduziert und eine effiziente Übertragung einer höheren Klemmkraft auf das zu klemmende Objekt ermöglicht.

Die Figuren 7A bis 7B zeigen eine Ausführungsform des erfindungsgemäßen Gehäuseteils 3c, das Teil des in den Figuren 1A bis 4B gezeigten Gehäuses 3 sein kann.

Das Gehäuseteil 3c ist für eine pneumatische Klemm- und/oder Bremsvorrichtung und umfasst:
eine erste ringförmige Aussparung 11a zum Einklemmen einer ersten ringförmigen Federplatte 1a; ein erstes Klemmelement 8_1 umfassend ein erstes Endstück 8a, wobei das erste Endstück 8a eine erste Endfläche 8f und eine erste Klemmfläche 7a aufweist, wobei das erste Klemmelement 8_1 ausgelegt ist, wenn die erste Federplatte 1a derart in der ersten Aussparung 11a zwischen einer durch die erste Aussparung 11a definierten ersten Anlagefläche 101 und einer durch die erste Aussparung 11a definierten zweiten Anlagefläche 102 eingeklemmt ist, dass sich ein erstes Ende der ersten Federplatte 1a an der durch die erste Aussparung 11a definierten ersten Anlagefläche 101 abstützt und ein zweites Ende der ersten Federplatte 1a auf die durch die erste Aussparung 11a definierten zweite Anlagefläche 102 drückt, eine erste Klemm- und/oder Bremskraft auf ein erstes zu klemmendes und/oder zu bremsendes Objekt 5 über die erste Klemmfläche 7a zu übertragen;
eine zweite ringförmige Aussparung 11b zum Einklemmen einer zweiten ringförmigen Federplatte 1b; ein zweites Klemmelement 8_2 umfassend ein zweites Endstück 8a, wobei das zweite Endstück 8a eine zweite Endfläche 8f und eine zweiten Klemmfläche 7b aufweist, wobei das zweite Klemmelement 8_2 ausgelegt ist, wenn die zweite Federplatte 1b derart in der zweiten Aussparung 11b zwischen einer durch die zweite Aussparung 11b definierten ersten Anlagefläche 101 und einer durch die zweite Aussparung 11b definierten zweiten Anlagefläche 102 eingeklemmt ist, dass sich ein erstes Ende der zweiten Federplatte 1b an der durch die zweite Aussparung 11b definierten ersten Anlagefläche 101 abstützt und ein zweites Ende der zweiten Federplatte 1b auf die durch die zweite Aussparung 11b definierten zweite Anlagefläche 102 drückt, eine zweite Klemm- und/oder Bremskraft auf ein zweites zu klemmendes und/oder zu bremsendes Objekt 5 über die zweite Klemmfläche 7b zu übertragen; und
wobei die erste Endfläche 8f des ersten Klemmelements 8_1 und die zweite Endfläche 8f des zweiten Klemmelements 8_2 voneinander abgewandt, und vorzugsweise in entgegengesetzte Richtungen orientiert, angeordnet sind.

Die erste Klemm- und/oder Bremskraft kann in einer ersten Klemmebene K1 erfolgen, die durch zwei Vektoren aufgespannt wird, die jeweils einen Radius (R, vgl. Fig. 5A) der ersten ringförmigen Aussparung 11a bilden und sich eine Längsachse LA1 des ersten Endstücks quer, vorzugsweise senkrecht, zu der ersten Klemmebene K1 erstreckt und/oder die zweite Klemm- und/oder Bremskraft in einer zweiten Klemmebene K2 erfolgt, die durch zwei Vektoren aufgespannt wird, die jeweils einen Radius R der zweiten ringförmigen Aussparung 11b bilden und sich eine Längsachse LA2 des zweiten Endstücks quer, vorzugsweise senkrecht, zu der zweiten Klemmebene K2 erstreckt, vorzugsweise wobei die erste Endfläche 8f des ersten Klemmelements 8_1 und die zweite Endfläche 8f des zweiten Klemmelements 8_2 in entgegengesetzte Richtungen der Längsachsen LA1, LA2 der Endstücke orientiert sind.

Das Gehäuseteil kann einen, vorzugsweise einteiligen oder einstückigen, Gehäusebalken 17 aufweisen, der mit den beiden Klemmelementen 8_1, 8_2 verbunden ist und sich (radial) zwischen einem äußeren Rand und einem inneren Rand des Gehäuseteils 3c und (axial) zwischen den Aussparungen 11a, 11b erstreckt, vorzugsweise wobei der Gehäusebalken 17 auf einer ersten Balkenoberfläche die erste ringförmige Aussparung 11a ausbildet und auf einer zweiten Balkenoberfläche, die der ersten Balkenoberfläche abgewandt und/oder entgegengesetzt ist, die zweite ringförmige Aussparung 11b ausbildet.

Der Gehäusebalken kann sich mit dessen Längsachse LA3 quer zu der Längsachse LA1, LA2 des ersten und/oder zweiten Endstücks und/oder Gehäuseabschnitts 18, und vorzugsweise im Wesentlichen parallel zu der ersten und/oder zweiten Klemmebene K1, K2, erstreckt. Das erste Endstück kann mittels des von dem ersten Endstück bis zu dem zweiten Endstück sich durchgängig erstreckenden Gehäuseabschnitts 18 mit dem zweiten Endstück verbunden sein.

Die erste ringförmige Aussparung 11a kann in Richtung der Längsachse LA1 des ersten Endstücks hin geöffnet ist und/oder die zweite ringförmige Aussparung 11b in Richtung der Längsachse LA2 des zweiten Endstücks hin geöffnet ist.

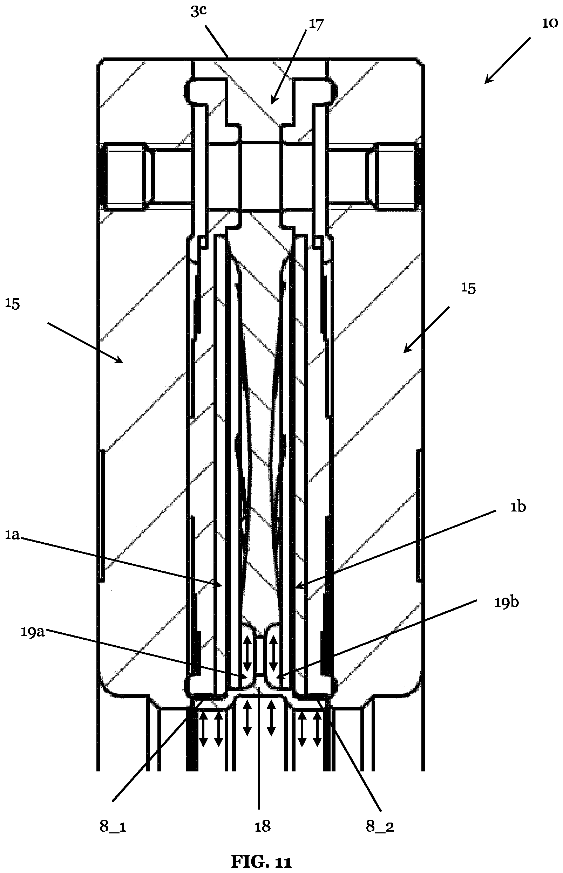

Nach einer besonders bevorzugte Maßnahme zur Reduktion des Gehäusewiederstands, hat die erste Balkenoberfläche im Bereich der ersten ringförmigen Aussparung 11a einen ersten Ausschnitt 19a und/oder die zweite Balkenoberfläche hat im Bereich der zweiten ringförmigen Aussparung 11b einen zweiten Ausschnitt 19b ausgebildet, wobei vorzugsweise sich für jeden der Ausschnitte 19a, 19b die in der betreffenden ringförmigen Aussparung eingeklemmte Federplatte (vgl. 1a, 1b in Fig. 11) über den Ausschnitt hinweg erstreckt.

Wie in Fig. 7B in Kombination mit den Doppelpfeilen in Fig. 11 gezeigt, können bevorzugt ein oder mehrere der Ausschnitte 19a, 19b derart ausgestaltet sind, dass der Gehäusebalken 17 in dem Bereich angrenzend zu dem Ausschnitt 19a, 19b ausgelegt ist, sich in Reaktion auf das Drücken der in der betreffenden ringförmigen Aussparung 11a, 11b eingeklemmten Federplatte 1a, 1b auf die durch die betreffende ringförmige Aussparung 11a, 11b definierte zweite Anlagefläche 102 in radialer Richtung zu dehnen und wieder in radialer Richtung zu relaxieren.

Optional kann in dem Bereich des Gehäusebalkens 17, der sich zwischen und angrenzend zu den Ausschnitten 19a, 19b erstreckt, eine als Durchbruch durch den Gehäusebalken 17 ausgestaltete Öffnung O (gepunktetes Rechteck in Fig. 7B) hergerichtet sein. Durch diese Öffnung O kann Druckmedium von dem Bereich von Ausschnitt 19a zu dem Bereich zu Ausschnitt 19b gelangen.

Die Erfinder haben herausgefunden, dass für jeden der Ausschnitte 19a, 19b jedes der hierin beschriebenen Gehäuseteils 3c folgende Größen einzeln oder in beliebiger Kombination besonders geeignet ist, um diese radiale Dehnbarkeit des Gehäusebalkens 17 besonders effektiv einzustellen besonders stark auszuprägen:
- eine Ausschnittslänge AL, die vorzugsweise 3 bis 12 mm beträgt, und/oder
- eine Dicke D, die vorzugsweise 0,3 bis 1 mm beträgt, des Gehäusebalkens 17 in einem Bereich angrenzend zu dem Ausschnitt 19a, 19b, und/oder
- ein oder mehrere Krümmungsradien RC (an jeder der gekrümmten Konturen der Ausschnitte 19a, 19b, vgl. Fig. 7B, dort exemplarisch für 2 der 4 Krümmungen beschriftet), die vorzugsweise 0,2 bis 1,2 mm betragen, der betreffenden Balkenoberfläche; und/oder
- Position der Öffnung O radial entlang des Gehäusebalkens 17, wobei die Position vorzugsweise radial mittig im Bereich des Gehäusebalkens ist, der sich zwischen und angrenzend zu den Ausschnitten 19a, 19b erstreckt; und/oder
- Länge der Öffnung O radial entlang des Gehäusebalkens 17, welche Länge vorzugsweise 1,5 bis 8 mm beträgt.

Die Figuren 8A bis 8B zeigen ein erfindungsgemäßes Gehäuseteil 3c mit der dazugehörigen Federplatte 1a bzw. 1b, die in der Aussparung 11, 11a, 11b zwischen der ersten Anlagefläche 101 und der zweiten Anlagefläche 102 eingeklemmt ist.

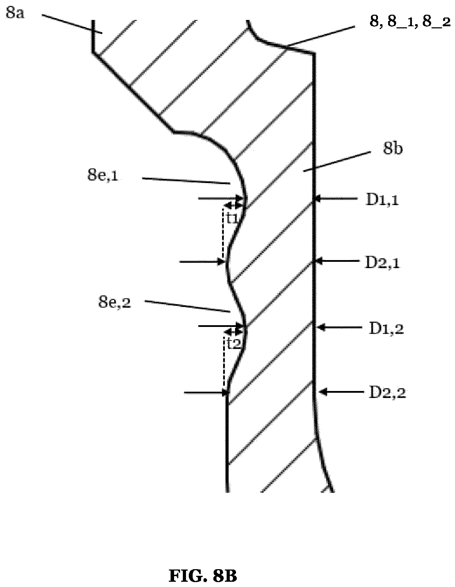

Als weitere bevorzugte Maßnahme, die alternativ oder zusätzlich zu den Maßnahmen zur Dehnbarkeit des Gehäusebalkens 17 nach Figuren 7A und 7B in dem Gehäuseteil 3c realisiert werden kann, ist die eingangs erwähnte und in den Figuren 8A und 8B näher gezeigte Verjüngung im Klemmelement 8, 8_1, 8_2. Bevorzugt haben nämlich ein oder mehrere der Klemmelemente 8, 8_1, 8_2 einen an das dazugehörige Endstück 8a des Klemmelements angrenzenden Arm 8b, wobei sich ein Abschnitt des Arms zu dem angrenzenden Endstück hin verjüngt. Durch diese Verjüngung kann das Klemmelement flexibler ausgestaltet werden, so dass auch dadurch der Gehäusewiderstand herabgesetzt wird und die Klemmkraft effektiver auf das zu klemmende Objekt übertragen werden kann.

Wird nämlich durch Belüften oder Beaufschlagung mit Druckmedium im zweiten (inneren) Druckraum 2 eine Kraft F1 zum Verbiegen der Federplatte 1a bzw. 1b bewirkt, so führt diese Verbiegung der Federplatte zu einer Federkraft F2 mit der ein Ende der Federplatte gegen die zweite Anlagefläche 102 drückt. Die auf die zweite Anlagefläche 102 wirkende Federkraft F2 sorgt für eine Drehung und/oder elastische Verformung des Klemmelements 8 (hier und im Folgenden für 8_1, 8_2 als 8 bezeichnet). Das Klemmelement 8 umfasst einen Arm 8b und ein an den Arm 8b angrenzendes Endstück 8a mit einer Klemmfläche 7, wobei das Klemmelement 8 ausgelegt ist, eine Klemm- und/oder Bremskraft F3 auf ein zu klemmendes und/oder zu bremsendes Objekt 5 über die Klemmfläche 7 zu übertragen, wobei sich ein Abschnitt 8c des Arms 8b zum Endstück 8a hin (vorzugsweise graduell) verjüngt, wie in Figuren 8A und 8B genauer und beispielhaft gezeigt.

In Fig. 8A ist die Verjüngung des Armabschnitts 8c beispielhaft als kontinuierliche und vorzugsweise graduelle Querschnittsreduktion gezeigt. Jedoch muss dies im Rahmen dieser Offenbarung nicht der Fall sein. Andere Möglichkeiten für die Realisierung der Verjüngung sind denkbar.

Das Klemmelement 8 kann derart ausgelegt bzw. elastisch sein, dass das Klemmelement einen Hebelarmabschnitt 8d bildet, der ausgelegt ist, sich durch das Drücken der Federplatte 1a bzw. 1b auf die zweite Anlagefläche 102 des Gehäuseteils 3a bzw. 3b mit Federkraft F2 elastisch zu verformen und dadurch um einen Drehpunkt D derart zu drehen (vgl. gebogener Pfeil in Figur 8A), dass die Klemmfläche 7 des Klemmelements 8 die Klemm- und/oder Bremskraft F3 auf das zu klemmende und/oder zu bremsende Objekt 5 überträgt.

Der Drehpunkt D kann im Bereich um den oder innerhalb des Arms 8b sein, beispielsweise in dem mit D gekennzeichneten Bereich in Figur 8A. Andere Positionen für D sind möglich.

Das Endstück 8a des Klemmelements 8 bildet entlang der Klemmfläche 7 einen Abschnitt eines Hebelarms 8d. Das Einwirken der Federkraft F auf die zweite Anlagefläche 102, die hier der Klemmfläche 7 abgewandt und gegenüberliegend ist, bewirkt die Drehung des Hebelarms 8d um den Drehpunkt D derart, dass das Ende R1 und das Ende R2 des Hebelarms 8d sich jeweils zu dem zu beklemmenden Objekt 5 hinbewegen. Das zweite Ende R2 des Hebelarmabschnitts 8d kann näher an dem Drehpunkt D liegen als das erste Ende R1 des Hebelarmabschnitts 8d und können jeweils im Bereich von Begrenzungen der Klemmfläche 7 liegen. Das Ende R1 bewegt sich dabei um ein radialen Hub H₁ auf das zu klemmende Objekt hin und die Klemmfläche 7 berührt im Bereich von R1 das zu klemmende Objekt 5. Das Ende R2 bewegt sich dabei um ein radialen Hub H2 auf das zu klemmende Objekt hin und die Klemmfläche 7 berührt im Bereich von R2 das zu klemmende Objekt 5. Der bewirkte erste radiale Hub H1 kann dem Ein- bis Zehnfachen, vorzugsweise dem 1,25- bis Fünffachen, besonders bevorzugt dem 1,35- bis Zweifachen, des bewirkten zweiten radialen Hubes H2 entsprechen.

Somit wird durch die Verbiege-Kraft F1 eine Federkraft F2 bewirkt, die wiederum eine Klemmkraft F3 bewirkt, die über die Klemmfläche 7 im Bereich des Hebelarms 8d des Klemmelements 8 auf das zu klemmende Objekt 5 wirkt und dieses klemmt. Die Vorrichtung wird so in den geschlossenen Zustand überführt.

Die Abstand L1 vom ersten Ende R1 des Hebelarmabschnitts zu dem Drehpunkt D kann derart gewählt sein, dass der erste radiale Hub H1 mindestens 0,13 mm, bevorzugt mindestens 0,15 mm, besonders bevorzugt mindestens 0,17 mm beträgt. Der Abstand L2 von dem Drehpunkt D zu dem zweiten Ende R1 des Hebelarmabschnitts 8d und die Verjüngung können derart gewählt sein, dass der zweite radiale Hub H2 mindestens 0,06 mm, bevorzugt mindestens 0,07 mm, besonders bevorzugt mindestens 0,08 mm beträgt.

Solche radiale Hube sind geeignet, eine größere Vielzahl der üblichen, unterschiedlich dimensionierten Objekte (z.B. Wellen) zu klemmen und/oder zu bremsen, und übliche thermisch bedingte Reibkontakte zu vermeiden. Bevorzugt beträgt der Abstand L11 mm bis 6 mm, 2 mm bis 5 mm, oder 2 mm bis 4 mm. L2 beträgt vorzugsweise 0,5 mm bis 3 mm oder 0,75 mm bis 1,5 mm.

Die Verjüngung kann derart ausgeprägt sein, dass die dünnste Dicke bzw. geringste Ausdehnung des Querschnitts, D1, des Abschnitts 8c des Arms 8b an dem dem Endstück 8a zugewandten Ende des Abschnitts 8c weniger als 85%, 80%, 75%, 70%, 60%, oder 50% der Dicke bzw. der Ausdehnung des Querschnitts, D2, des Abschnitts 8c des Arms 8b beträgt, das dieser an dem (gegenüberliegenden) Ende des Abschnitts 8c, das dem Endstück 8a abgewandt ist, aufweist. Dadurch wird besonders effektiv der Gehäusewiderstand reduziert.

Der sich verjüngende Abschnitt des Arms 8b kann ein oder mehrere Aussparungen 8e, 8e,1, 8e,2 im Arm 8b aufweisen. Im Beispiel von Fig. 8B ist der Armabschnitt zum Endstück 8a hin verjüngt, indem der Armabschnitt die Aussparungen 8e,1 und 8e,2 aufweist, die jeweils eine Verjüngung zum Endstück 8a hin bewirken. Die Aussparungen können jeweils eine Tiefe, t1/2 (vgl. Fig. 8B: Tiefe t1/2 gemessen als Abstand des tiefsten Punkts bei D1,1/D1,2 der jeweiligen Aussparung 8e,1, 8e,2 von der Extrapolation (gestrichelt angedeutete Gerade in Fig. 8B) der an die Aussparung angrenzenden Oberfläche bei D2,1/D2,2 des Armabschnitts über die Aussparung 8e,1, 8e,2 hinweg), von 10% bis 50%, vorzugsweise 10% bis 35%, besonders bevorzugt 15% bis 25 %, der größten Dicke, bzw. größten Ausdehnung des Querschnitts, D2,1,D2,2 des Arms 8b im Bereich der jeweiligen Aussparung 8e,1, 8e,2 aufweisen. Die Erfinder haben herausgefunden, dass durch diese Werte jeweils ein besonders effektiver Beitrag zur Reduktion des Gehäusewiderstand erzielt wird, ohne die Stabilität des Gehäuses negativ zu beeinträchtigen.

Die ein oder mehreren Aussparungen 8e können mindestens eine Aussparung mit abgerundeter Kontur, vorzugsweise mit Krümmungsradius von 0,25 bis 0,75 mm, vorzugsweise 0,4 mm bis 0,6 mm, aufweisen. Auch dadurch wird ein besonders effektiver Beitrag zur Reduktion des Gehäusewiderstand bereitgestellt, wie die Erfinder herausgefunden haben.

Wie in Figur 8B auch gezeigt können die ein oder mehreren Aussparungen 8e zwei oder mehr wellenförmige Aussparungen 8e,1, 8e,2 sein, die jeweils diesen Krümmungsradius im Bereich der abgerundeten Wellentäler (bei D1,1, D1,2 der Aussparungen 8e,1, 8e,2) und ggf. Wellenberge (bei D2,1, D2,2 der Aussparungen 8e,1, 8e,2) aufweisen. Zudem können die Wellentäler jeweils die o.g. Werte für die Tiefe t1/2 aufweisen. Auch dadurch werden besonders effektive Beiträge zur Reduktion des Gehäusewiderstand bereitgestellt, ohne die Stabilität des Gehäuses negativ zu beeinträchtigen.

Die kontinuierliche (und ggf. graduelle) Verjüngung des Armabschnitts 8c zum Endstück 8a hin, wie in Figur 8A beispielhaft gezeigt, kann jedoch auch mit den (z.B. wellenförmigen) Aussparungen 8e,1, 8e,2, wie in der Figur 6B gezeigt, in dem Armabschnitt 8c (vgl. Figur 8A) übereinanderliegend kombiniert werden, um den Gehäusewiderstand noch etwas stärker zu reduzieren. Mit anderen Worten wird dann der jeweilige Wert für D1 und D2 von Aussparung zu Aussparung (falls mehrere Aussparungen 8e vorliegen) im Armabschnitt 8c zum Endstück 8a hin aufgrund des kontinuierlichen Abfalls des Querschnitts bzw. der Dicke des Armes 8b über der Armabschnitt 8c hin geringer.

Der kontinuierliche Abfall des Querschnitts bzw. der Dicke des Arms 8b über den Abschnitt 8c hinweg zum Endstück 8a hin und die durch jede der Aussparungen 8e zusätzlich gebildete Verjüngung zum Endstück 8a hin können derart ausgeprägt sein, dass der geringste Wert für D1,1 im Bereich derjenigen Aussparung 8e,1, die dem Endstück 8a am nächsten liegt, 85% oder weniger, 80% oder weniger, 75% oder weniger, 70% oder weniger, 60% oder weniger oder 50% oder weniger des größten Wertes von D2,2 im Bereich derjenigen Aussparung 8e,2 ist, die am weitesten vom Endstück 8a entfernt angeordnet ist. Dadurch wird besonders stark der Gehäusewiderstand reduziert, ohne jedoch die Stabilität des Gehäuses merklich zu beeinträchtigen. Ein verjüngter Abschnitt 8c des Arms 8b kann sich dann sowohl zwischen D1,1 und D2,1 bzw. D2,2 und D2,2 einer jeden Aussparung 8e,1, 8e,2 erstrecken, als auch zwischen D1,1 und D2,2, wobei Letztere (in etwa) D1 und D2 aus Fig. 8A entsprechen können.

Die erfindungsgemäße Verjüngung erlaubt es den Gehäusewiderstand zu reduzieren und dadurch einen größeren Anteil der Kraft F2 zu der Kraft F3 zu überführen und den radialen Hub H2 länger auszugestalten, als bei konventionellen Klemmvorrichtungen, die keine Verjüngung aufweisen. Dabei sind Werte für R2 von R2= 50% bis 75 % von R1 bevorzugt erreichbar. Dadurch wird auch ein größerer Anteil der Klemmfläche 7 Kontakt mit dem Objekt 5 gebracht und der Verschleiß wird reduziert. Diese Vorteile werden realisiert, ohne, dass die strukturellen Veränderungen zu einer Verringerung der Schließ- und Öffnungsgeschwindigkeit der Klemmvorrichtung 10 führt oder signifikant höherer Aufwand bei der Herstellung notwendig werden würde. Die Herstellung und die Dynamik der Federplatten 1a, 1b kann somit wie gewünscht unverändert bleiben.

Die Maßnahmen aus Figuren 7A und 7B (insb. Ausschnitte 19a, 19b im Balken 17) und aus Figuren 8A und 8B (Verjüngung im Klemmelement 8, 8_1, 8_2) wirken in Kombination synergetisch für die Reduktion des Gehäusewiderstands und dessen Folgen wie erhöhte Klemmkraft F3 und reduzierter Verschleiß an Klemmelementen 8 und Objekt 5.

Figur 9 zeigt eine bevorzugte Ausführungsform des erfindungsgemäßen Gehäuseteils 3c, in der die in der Figur 8B gezeigte Verjüngung realisiert ist.

Das Gehäuseteil 3c ist für eine pneumatische Klemm- und/oder Bremsvorrichtung und umfasst:
eine erste ringförmige Aussparung 11a zum Einklemmen einer ersten ringförmigen Federplatte 1a; ein erstes Klemmelement 8_1 umfassend ein erstes Endstück 8a, wobei das erste Endstück 8a eine erste Endfläche 8f und eine erste Klemmfläche 7a aufweist, wobei das erste Klemmelement 8_1 ausgelegt ist, wenn die erste Federplatte 1a derart in der ersten Aussparung 11a zwischen einer durch die erste Aussparung 11a definierten ersten Anlagefläche 101 und einer durch die erste Aussparung 11a definierten zweiten Anlagefläche 102 eingeklemmt ist, dass sich ein erstes Ende der ersten Federplatte 1a an der durch die erste Aussparung 11a definierten ersten Anlagefläche 101 abstützt und ein zweites Ende der ersten Federplatte 1a auf die durch die erste Aussparung 11a definierten zweite Anlagefläche 102 drückt, eine erste Klemm- und/oder Bremskraft auf ein erstes zu klemmendes und/oder zu bremsendes Objekt 5 über die erste Klemmfläche 7a zu übertragen;
eine zweite ringförmige Aussparung 11b zum Einklemmen einer zweiten ringförmigen Federplatte 1b; ein zweites Klemmelement 8_2 umfassend ein zweites Endstück 8a, wobei das zweite Endstück 8a eine zweite Endfläche 8f und eine zweiten Klemmfläche 7b aufweist, wobei das zweite Klemmelement 8_2 ausgelegt ist, wenn die zweite Federplatte 1b derart in der zweiten Aussparung 11b zwischen einer durch die zweite Aussparung 11b definierten ersten Anlagefläche 101 und einer durch die zweite Aussparung 11b definierten zweiten Anlagefläche 102 eingeklemmt ist, dass sich ein erstes Ende der zweiten Federplatte 1b an der durch die zweite Aussparung 11b definierten ersten Anlagefläche 101 abstützt und ein zweites Ende der zweiten Federplatte 1b auf die durch die zweite Aussparung 11b definierten zweite Anlagefläche 102 drückt, eine zweite Klemm- und/oder Bremskraft auf ein zweites zu klemmendes und/oder
zu bremsendes Objekt 5 über die zweite Klemmfläche 7b zu übertragen; und wobei die erste Endfläche 8f des ersten Klemmelements 8_1 und die zweite Endfläche 8f des zweiten Klemmelements 8_2 voneinander abgewandt, und vorzugsweise in entgegengesetzte Richtungen orientiert, angeordnet sind.

In dieser Ausführungsform haben die Klemmelemente 8_1, 8_2 jeweils einen an das dazugehörige Endstück 8a des Klemmelements angrenzenden Arm 8b, wobei sich ein Abschnitt des Arms zu dem angrenzenden Endstück hin verjüngt. In Figur 9 sind die Verjüngungen zumindest auch mittels der Aussparungen 8e im Arm des jeweiligen Klemmelements 8_1, 8_2 umgesetzt. Andere Realisierungen, wie im Zusammenhang mit den Figuren 8A, 8B beschrieben sind jedoch alternativ oder zusätzlich möglich.

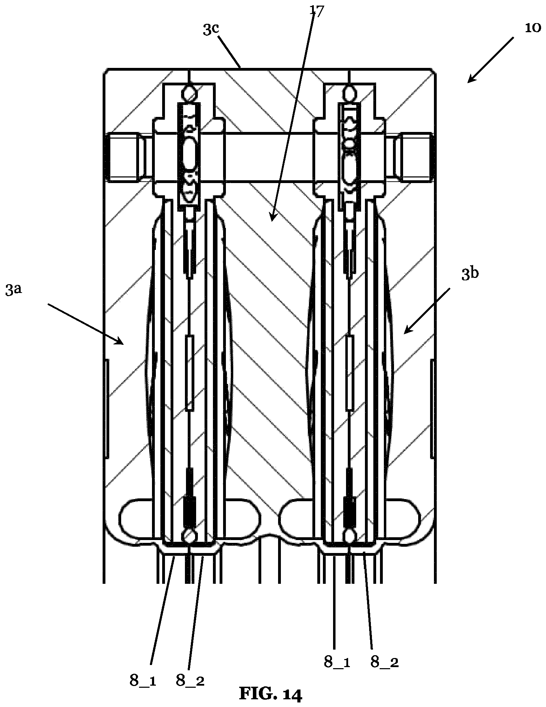

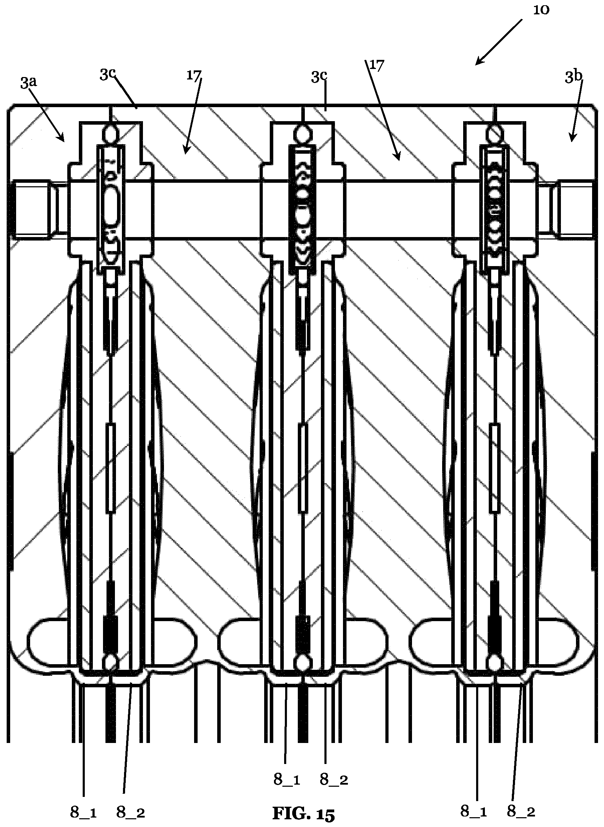

Wie in Figur 9 dargestellt, sind in dieser Ausführungsform des erfindungsgemäßen Gehäuseteils 3c die im Zusammenhang mit der Figur 7B erläuterten Ausschnitte 19a, 19b optional. Beispielsweise kann statt dieser Ausschnitte 19a, 19b, die in Fig. 6 dargestellten und aus dem Stand der Technik bekannten Ausbuchtungen im Gehäuseteil im Bereich des Klemmelements Verwendung finden, beispielsweise wenn als Abdeckung für das Gehäuseteil 3c die Gehäuseteile 3a, 3b aus dem Stand der Technik verwendet werden, wie in Figuren 14 und 15 gezeigt. Dies kann gewünscht sein, um möglichst schon bestehende Gehäusebauteile 3a, 3b wieder zu verwenden und zeigt, dass das erfindungsgemäße Gehäuseteil auch als Retrofit für bestehende Gehäuseteile 3a, 3b Verwendung findet und daher in solchen Fällen zusätzliches Material und zusätzlichen Prozessaufwand moderat gehalten werden kann.

Figuren 10A und 10B zeigen jedoch bevorzugte erfindungsgemäße Abdeckungen 15, 16 für Ausführungsformen des erfindungsgemäßen Gehäuseteils 3c. Diese Abdeckungen 15, 16 bewirken nämlich, dass die Axialkraft F_ax (vgl. Fig. 6) vollständig eliminiert werden kann. Wie diese Abdeckungen 15, 16 in Kombination mit dem erfindungsgemäßen Gehäuseteil 3c verwendet werden können, zeigen die folgenden Figuren 11 bis 13.

Das erfindungsgemäße Gehäuseteil 3c kann auf einfache Art und Weise entweder mit den neuen erfindungsgemäßen Abdeckungen 15, 16 oder mit den bestehenden konventionellen Gehäuseteilen 3a, 3b in eine erfindungsgemäße Klemmvorrichtung 10 integriert werden.

Figur 11 zeigt eine bevorzugte Ausführungsform der erfindungsgemäßen Klemm- und/oder Bremsvorrichtung 10, in der die in den Figuren 7A und 7B gezeigte Ausführungsform des erfindungsgemäßen Gehäuseteils 3c samt darin eingeklemmter Federplatten 1a, 1b und die in Figur 10A gezeigte bevorzugten Abdeckungen 15 realisiert sind, wobei jede der zwei Abdeckungen 15 die jeweilige ringförmigen Aussparung 11a, 11b abdeckt, in der jeweils eine der Fehlerplatten 1a, 1b eingeklemmt ist. Durch den Einsatz des erfindungsgemäßen Gehäuseteils 3c, insbesondere in Verbindung mit den Abdeckungen 15, tritt an den Klemmelementen 8_1, 8_2 keine Axialkraft F_ax (vgl. Fig. 6) mehr auf und eine höhere Klemmkraft F3 (vgl. Fig. 8A) kann auf das zu klemmen Objekt 5 übertragen werden.

Zudem bewirken die Ausschnitte 19a, 19b, die bevorzugt auch in dieser Ausführungsform vorhanden sind, eine gesteigerte radiale Dehnbarkeit des Gehäuseteils 3c zumindest im zwischen den Ausschnitten 19a, 19b liegenden Bereich des Gehäusebalkens 17 (vgl. Doppelpfeile in Fig. 11), was wiederum zu einer gleichmäßigen radialen, und im wesentlichen linearen, Bewegung der Klemmelemente 8_1, 8_2 und des dazwischen liegenden und die Klemmelemente miteinander verbinden Gehäuseabschnitts 18 führt (vgl. Doppelpfeile in Fig. 11). Die in Figur 8A angedeutete Drehung des Endstücks 8a eines jeden Klemmelements 8_1, 8_2 und eine damit einhergehende vorrangige Belastung der Klemmfläche am (freien) Ende des Endstücks (bei R1, vgl. Fig. 8A) kann dadurch vermieden werden, was den Verschleiß der Klemmelemente 8_1, 8_2 und des zu klemmenden Objekts reduziert und zudem zu einer gleichmäßigeren Beaufschlagung des Objekts mit Klemmkraft bewirkt.

Optional kann zusätzlich die in den Figuren 8A und 8B gezeigte Verjüngung bei dieser Ausführungsform realisiert sein, was die oben beschriebenen Effekte durch zusätzliche Reduzierung des Gehäusewiderstandes weiter verstärkt.

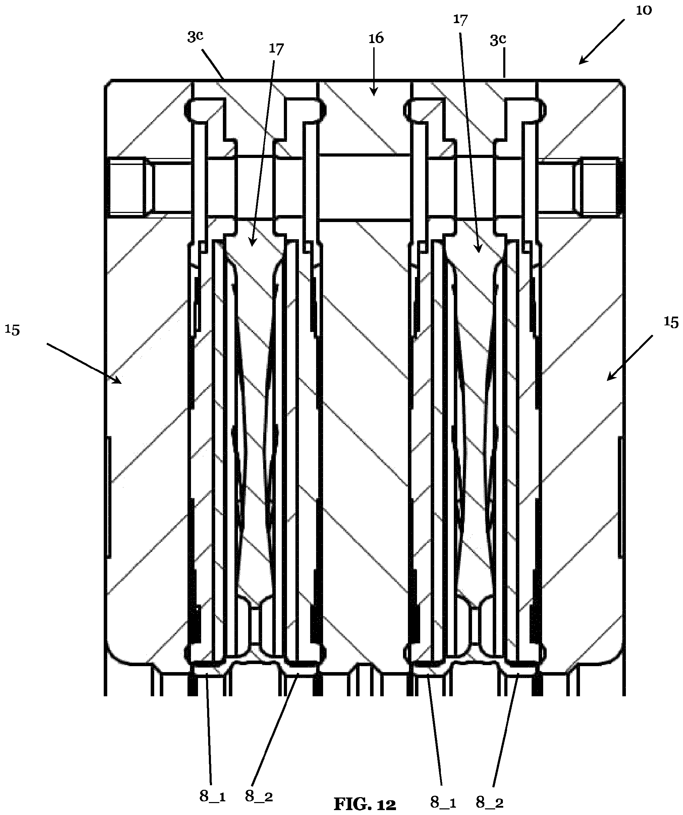

Figur 12 zeigt ein Tandem der bevorzugten Ausführungsform der erfindungsgemäßen Klemm- und/oder Bremsvorrichtung 10, in der die in den Figuren 7A und 7B gezeigte Ausführungsform des erfindungsgemäßen Gehäuseteils3c und die in Figur 10A und 10B gezeigten bevorzugten Abdeckungen 15, 16 realisiert sind. Optional kann zusätzlich die in den Figuren 8A und 8B gezeigte Verjüngung realisiert sein.

Im Vergleich zu der Ausführungsform nach Fig. 11 ist in diesem Tandem die erfindungsgemäße Abdeckung 16 und ein weiteres erfindungsgemäßes Gehäuseteil 3c mit darin eingeklemmten zwei Federplatten hinzugefügt. Durch das Tandem kann die aus das zu klemmende Objekt beaufschlagte Klemmkraft vervielfältigt, insb. verdoppelt, werden.

Hier sind also zwei erfindungsgemäße Gehäuseteile 3c in Reihe bzw. übereinander angeordnet, wobei die Abdeckungen 15, 16 die jeweiligen ringförmigen Aussparungen 11a, 11b abdecken. Die Abdeckung 16 ist dabei zwischen den beiden Gehäuseteilen 3c angeordnet. Dadurch tritt an den Klemmelementen 8_1, 8_2 keine Axialkraft F_ax mehr auf. Zudem bewirken die Ausschnitte 19a, 19b, die auch in dieser Ausführungsform vorhanden sind eine gesteigerte radiale Dehnbarkeit der Gehäuseteile 3c, wie in Fig. 11 dargestellt.

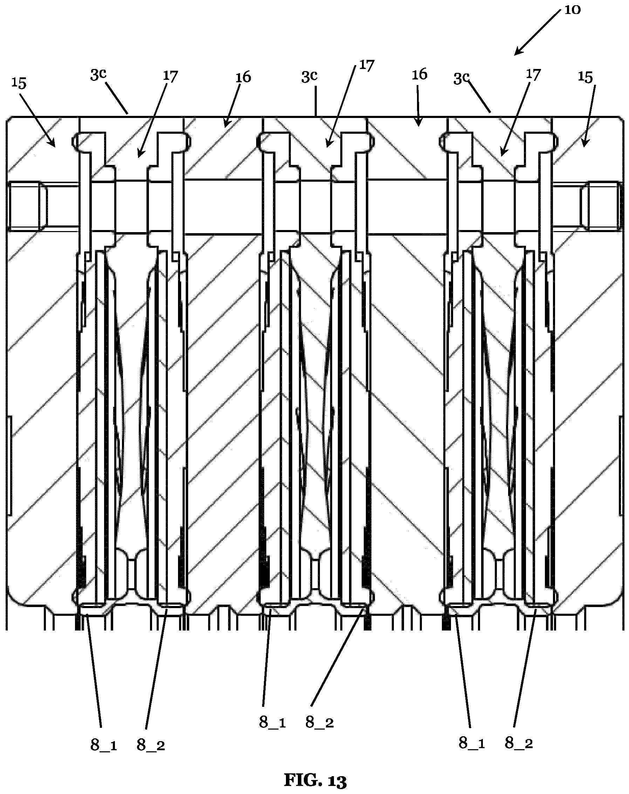

Figur 13 zeigt ein Tridem der bevorzugten Ausführungsform der erfindungsgemäßen Klemm- und/oder Bremsvorrichtung 10, in der die in den Figuren 7A und 7B gezeigte Ausführungsform des erfindungsgemäßen Gehäuseteils 3c und die in Figur 10A und 10B gezeigten bevorzugten Abdeckungen 15, 16 realisiert sind. Optional kann zusätzlich die in den Figuren 8A und 8B gezeigte Verjüngung realisiert sein.

Im Vergleich zu der Ausführungsform nach Fig. 12 ist in diesem Tridem eine weitere erfindungsgemäße Abdeckung 16 und ein weiteres erfindungsgemäßes Gehäuseteil 3c mit darin eingeklemmten zwei Federplatten hinzugefügt. Durch das Tridem kann die aus das zu klemmende Objekt beaufschlagte Klemmkraft vervielfältigt, insb. verdreifacht, werden.

Hier sind drei erfindungsgemäße Gehäuseteile 3c in Reihe bzw. übereinander angeordnet, wobei die Abdeckungen 15, 16 die jeweiligen ringförmigen Aussparungen 11a, 11b abdecken. Die Abdeckung 16 ist dabei jeweils zwischen zwei Gehäuseteilen 3c angeordnet. Dadurch tritt an den Klemmelementen 8_1, 8_2 keine Axialkraft F_ax mehr auf. Zudem bewirken die Ausschnitte 19a, 19b, die auch in dieser Ausführungsform vorhanden sind eine gesteigerte radiale Dehnbarkeit der Gehäuseteile 3c, wie in Fig. 11 dargestellt.

Durch den in den Figuren 11 bis 13 dargestellten Einsatz des erfindungsgemäßen Gehäuseteils mit den Abdeckungen wird eine stärkere Verteilung der Angriffspunkte der Klemmelemente entlang des zu klemmenden Objekts, wie beispielsweise eine Welle, erreicht. Dies kann eine bessere Stützung des Objekts, sowie eine geringere Beanspruchung des Objekts und der Klemmelemente, bewirken. Oh

Figur 14 zeigt ein Tandem der bevorzugten Ausführungsform der erfindungsgemäßen Klemm- und/oder Bremsvorrichtung 10, in der die in der Figur 9 gezeigte Ausführungsform des erfindungsgemäßen Gehäuseteils 3c, mit oder ohne Verjüngung aus Figuren 8A und 8B und/oder mit oder ohne Ausschnitte 19a, 19b aus Fig. 7A, 7B, realisiert ist und in der die in Figur 6 gezeigten Gehäuseteile 3a, 3b aus dem Stand der Technik als Abdeckungen realisiert sind.

Hier ist ein erfindungsgemäßes Gehäuseteil 3c zwischen den Gehäuseteilen 3a, 3b angeordnet, so dass als Abdeckungen der jeweiligen ringförmigen Aussparungen 11a, 11b die konventionellen Gehäuseteile 3a, 3b verwendet werden. Dadurch werden dennoch zwei Kraftzentren and den Paaren von Klemmelementen 8_1, 8_2 entstehen (Tandem). Hierdurch kann eine besonders kompakte Bauweise unter Einsatz von neuen (3c) und bestehenden (3a, 3b) Gehäuseteilen realisiert werden. Durch das Tandem kann die aus das zu klemmende Objekt beaufschlagte Klemmkraft vervielfältigt, insb. verdoppelt, werden.

Figur 15 zeigt ein Tridem der bevorzugten Ausführungsform der erfindungsgemäßen Klemm- und/oder Bremsvorrichtung 10, in der die in der Figur 9 gezeigte Ausführungsform des erfindungsgemäßen Gehäuseteils 3c, mit oder ohne Verjüngung aus Figuren 8A und 8B und/oder mit oder ohne Ausschnitte 19a, 19b aus Fig. 7A, 7B, realisiert ist und in der die in Figur 6 gezeigten Gehäuseteile 3a, 3b aus dem Stand der Technik als Abdeckungen realisiert sind.

Hier sind zwei erfindungsgemäßen Gehäuseteile 3c in Reihe bzw. übereinander angeordnet, wobei als Abdeckungen der jeweiligen ringförmigen Aussparungen 11a, 11b die konventionellen Gehäuseteile 3a, 3b verwendet werden, so dass dennoch drei Kraftzentren and den Paaren von Klemmelementen 8_1, 8_2 entstehen (Tridem). Ferner ist jede der beiden benachbarten Gehäuseteile 3c Abdeckung der jeweils anderen. Dadurch kann eine besonders kompakte Bauweise unter Einsatz von neuen und bestehenden Gehäuseteilen realisiert werden.

Durch das Tridem kann die aus das zu klemmende Objekt beaufschlagte Klemmkraft vervielfältigt, insb. verdreifacht, werden.

Generell ist die Darstellung der hier beschriebenen Tandems und Tridems nur beispielhaft, da das erfindungsgemäße Gehäuseteilt 3c eine herstellungstechnisch effiziente Skalierung darüber hinaus zu einer noch größeren Vielzahl an Klemmen in einer Vorrichtung erlaubt.

Zur Herrichtung eines Tandems oder Tridems auf Basis von zwei bzw. drei Exemplaren der konventionellen Vorrichtung aus Fig. 6 bedarf es nämlich aufwändige Bearbeitungen der äußeren Oberflächen der in Fig. 6 gezeigten Gehäuseteile 3a, 3b, sowie aufwändige Maßnahmen zur Ermöglichung einer durchgehenden Fixierung der Gehäuseteile 3a, 3b. Diese aufwändigen Verfahrensschritte bei der Herstellung entfallen jedoch teilweise oder gar vollständig durch den Einsatz des erfindungsgemäßen Gehäuesteils 3c zur Herrichtung von Tandems oder Tridems, wie sich aus den Figuren 11 bis 15 ergibt. Dies gilt selbst im Falle der Verwendung der Gehäuseteile 3a, 3b als Abdeckung wie in den Figuren 14 und 15 gezeigt.

Jede der in den Figuren 11 bis 15 gezeigten erfindungsgemäßen Klemmvorrichtungen 10
umfasst insbesondere dabei Folgendes: ein Gehäuse 3 umfassend: ein oder mehrere hier beschriebene erfindungsgemäße Gehäuseteile 3c; und für jedes der Gehäuseteile 3c, eine erste dem Gehäuseteil 3c zugewiesene Abdeckung (vgl. 15, 3a, 3c) und eine zweite dem Gehäuseteil zugewiesene Abdeckung (vgl. 15, 16, 3b, 3c); wobei für jedes der Gehäuseteile 3c:
die erste Abdeckung derart die erste Aussparung 11a abdeckt und die zweite Abdeckung derart die zweite Aussparung 11b abdeckt, dass die Aussparungen 11a, 11b zusammen einen Innenraum 13 innerhalb des Gehäuses 3 bilden, wobei der Innenraum 13 eine darin angeordnete Feder 1 umfasst, welche Feder 1 eine erste ringförmige Federplatte 1a und eine zweite ringförmige Federplatte 1b umfasst, wobei die erste Federplatte 1a zwischen der durch die erste Aussparung 11a definierten ersten Anlagefläche 101 und der durch die erste Aussparung 11a definierten zweiten Anlagefläche 102 eingeklemmt ist und die zweite Federplatte 1b zwischen der durch die zweite Aussparung 11b definierten ersten Anlagefläche 101 und der durch die zweite Aussparung 11b definierten zweiten Anlagefläche 102 eingeklemmt ist, so dass in dem Innenraum 13 mindestens ein Druckraum 2, 4 gebildet wird, der zumindest teilweise durch die Federplatten 1a, 1b begrenzt wird, wobei der Druckraum 2, 4 be- oder entlüftbar ist und mit Überdruck eines dem Gehäuse 3 zuführbaren Druckmediums beaufschlagbar ist, und wobei die Federplatten 1a, 1b derart relativ zu den mindestens einen Druckraum 2, 4 angeordnet sind, dass durch Be- oder Entlüften des Druckraums 2, 4 oder Beaufschlagung des Druckraum 2, 4 mit Überdruck, eine Biegung mindestens einer der Federplatten 1a, 1b veränderbar ist und dadurch die Klemm- und/oder Bremsvorrichtung 10 zwischen einem geöffneten Zustand, in dem ein zu klemmendes und/oder zu bremsendes Objekt 5 von den Klemmflächen 7 beabstandet ist, und einem geschlossenen Zustand, in dem ein oder mehrere der Klemmflächen 7 eine Klemm- und/oder Bremskraft auf das Objekt 5 übertragen, wechselt.

Figuren 11 bis 15 zeigen, dass das das neue erfindungsgemäße Gehäuseteil 3c je nach Anwendung flexibel einsetzbar ist. So kann im Fall von einem größeren Bedarf an Klemmkraft das erfindungsgemäße Gehäuseteil 3c mit den neuartigen erfindungsgemäßen Abdeckungen 15, 16 eingesetzt werden. Sollte jedoch eher eine kompakte Bauweise, z.B. zum Klemmen von kürzeren zu klemmenden Objekten, und der Rückgriff auf bestehende Komponenten im Vordergrund stehen, so ist der Einsatz des neuartigen Gehäuseteils 3c in Kombination mit den konventionellen Gehäuseteilen 3a, 3b als Abdeckungen vorteilhaft.

Auch kann das erfindungsgemäße Gehäuseteile 3c flexibel mit zusätzlichen Maßnahmen zur Reduktion des Gehäusewiderstandes, wie etwa die Ausschnitte 19a, 19b am Gehäusebalken oder die Verjüngung am Klemmelement, ergänzt werden, um die Klemmkraft weiter zu erhöhen und besonders gleichmäßig auf das zu klemmende Objekt zu beaufschlagen.

Verschiedene Aspekte und Ausführungsformen wurden beschrieben. Die Erfindung kann (alternativ) auch durch ein oder mehrere der folgenden nummerierten Aspekte beschrieben werden:

### ASPEKTE

1. Ein Gehäuseteil (3c) für eine pneumatische Klemm- und/oder Bremsvorrichtung (10), das Gehäuseteil (3c) umfassend:
   eine erste ringförmige Aussparung (11a) zum Einklemmen einer ersten ringförmigen Federplatte (1a);
   ein erstes Klemmelement (8_1) umfassend ein erstes Endstück (8a), wobei das erste Endstück (8a) eine erste Endfläche (8f) und eine erste Klemmfläche (7a) aufweist, wobei das erste Klemmelement (8_1) ausgelegt ist, wenn die erste Federplatte (1a) derart in der ersten Aussparung (11a) zwischen einer durch die erste Aussparung (11a) definierten ersten Anlagefläche (101) und einer durch die erste Aussparung (11a) definierten zweiten Anlagefläche (102) eingeklemmt ist, dass sich ein erstes Ende der ersten Federplatte (1a) an der durch die erste Aussparung (11a) definierten ersten Anlagefläche (101) abstützt und ein zweites Ende der ersten Federplatte (1a) auf die durch die erste Aussparung (11a) definierten zweite Anlagefläche (102) drückt, eine erste Klemm- und/oder Bremskraft auf ein erstes zu klemmendes und/oder zu bremsendes Objekt (5) über die erste Klemmfläche (7a) zu übertragen;
   eine zweite ringförmige Aussparung (11b) zum Einklemmen einer zweiten ringförmigen Federplatte (1b);
   ein zweites Klemmelement (8_2) umfassend ein zweites Endstück (8a), wobei das zweite Endstück (8a) eine zweite Endfläche (8f) und eine zweiten Klemmfläche (7b) aufweist, wobei das zweite Klemmelement (8_2) ausgelegt ist, wenn die zweite Federplatte (1b) derart in der zweiten Aussparung (11b) zwischen einer durch die zweite Aussparung (11b) definierten ersten Anlagefläche (101) und einer durch die zweite Aussparung (11b) definierten zweiten Anlagefläche (102) eingeklemmt ist, dass sich ein erstes Ende der zweiten Federplatte (1b) an der durch die zweite Aussparung (11b) definierten ersten Anlagefläche (101) abstützt und ein zweites Ende der zweiten Federplatte (1b) auf die durch die zweite Aussparung (11b) definierten zweite Anlagefläche (102) drückt, eine zweite Klemm- und/oder Bremskraft auf ein zweites zu klemmendes und/oder zu bremsendes Objekt (5) über die zweite Klemmfläche (7b) zu übertragen;
   dadurch gekennzeichnet, dass
   die erste Endfläche (8f) des ersten Klemmelements (8_1) und die zweite Endfläche (8f) des zweiten Klemmelements (8_2) voneinander abgewandt, und vorzugsweise in entgegengesetzte Richtungen orientiert, angeordnet sind.
2. Das Gehäuseteil (3c) nach Aspekt 1, dadurch gekennzeichnet, dass das erste Endstück mittels eines von dem ersten Endstück bis zu dem zweiten Endstück sich durchgängig erstreckenden Gehäuseabschnitts (18) mit dem zweiten Endstück verbunden ist.
3. Das Gehäuseteil (3c) nach Aspekt 1 oder 2, dadurch gekennzeichnet, dass die erste Klemm- und/oder Bremskraft in einer ersten Klemmebene (K1) erfolgt, die durch zwei Vektoren aufgespannt wird, die jeweils einen Radius (R) der ersten ringförmigen Aussparung (11a) bilden und sich eine Längsachse (LA1) des ersten Endstücks quer, vorzugsweise senkrecht, zu der ersten Klemmebene (K1) erstreckt und/oder die zweite Klemm- und/oder Bremskraft in einer zweiten Klemmebene (K2) erfolgt, die durch zwei Vektoren aufgespannt wird, die jeweils einen Radius (R) der zweiten ringförmigen Aussparung (11b) bilden und sich eine Längsachse (LA2) des zweiten Endstücks quer, vorzugsweise senkrecht, zu der zweiten Klemmebene (K2) erstreckt, vorzugsweise wobei die erste Endfläche (8f) des ersten Klemmelements (8_1) und die zweite Endfläche (8f) des zweiten Klemmelements (8_2) in entgegengesetzte Richtungen der Längsachsen (LA1, LA2) der Endstücke orientiert sind.
4. Das Gehäuseteil (3c) nach Aspekt 1, 2 oder 3, dadurch gekennzeichnet, dass das Gehäuseteil einen, vorzugsweise einteiligen oder einstückigen, Gehäusebalken (17) aufweist, der mit den beiden Klemmelementen (8_1, 8_2) verbunden ist und sich zwischen einem äußeren Rand und einem inneren Rand des Gehäuseteils und zwischen den Aussparungen (11a, 11b) erstreckt, vorzugsweise wobei der Gehäusebalken (17) auf einer ersten Balkenoberfläche die erste ringförmige Aussparung ausbildet und auf einer zweiten Balkenoberfläche, die der ersten Balkenoberfläche abgewandt und/oder entgegengesetzt ist, die zweite ringförmige Aussparung ausbildet.
5. Das Gehäuseteil (3c) nach Aspekt 4, dadurch gekennzeichnet, dass der Gehäusebalken sich mit dessen Längsachse (LA3) quer zu der Längsachse (LA1, LA2) des ersten und/oder zweiten Endstücks, und vorzugsweise im Wesentlichen parallel zu der ersten (K1) und/oder zweiten (K1) Klemmebene, erstreckt.
6. Das Gehäuseteil (3c) nach Aspekt 3, 4 oder 5, dadurch gekennzeichnet, dass die erste ringförmige Aussparung (11a) in Richtung der Längsachse (LA1) des ersten Endstücks hin geöffnet ist und/oder die zweite ringförmige Aussparung (nb) in Richtung der Längsachse (LA2) des zweiten Endstücks hin geöffnet ist.
7. Das Gehäuseteil (3c) nach irgendeinem der vorangehenden Aspekte 2 bis 6, dadurch gekennzeichnet, dass sich die Längsachse (LA3) des Gehäusebalken (17) quer zu einer Längsachse (LA1, LA2) des durchgängigen Gehäuseabschnitts (18) erstreckt und mit diesem vorzugweise einteilig oder einstückig verbunden ist.
8. Das Gehäuseteil (3c) nach irgendeinem der vorangehenden Aspekte 4 bis 7, dadurch gekennzeichnet, dass die erste Balkenoberfläche im Bereich der ersten ringförmigen Aussparung (11a) einen ersten Ausschnitt (19a) und/oder die zweite Balkenoberfläche im Bereich der zweiten ringförmigen Aussparung (11b) einen zweiten Ausschnitt (19b) ausbildet, vorzugsweise wobei sich für jeden der Ausschnitte (19a, 19b) die in der betreffenden ringförmigen Aussparung eingeklemmte Federplatte über den Ausschnitt hinweg erstreckt.
9. Das Gehäuseteil (3c) nach Aspekt 8, dadurch gekennzeichnet, dass ein oder mehrere der Ausschnitte (19a, 19b) derart ausgestaltet sind, dass der Gehäusebalken (17) in dem Bereich angrenzend zu dem Ausschnitt (19a, 19b) ausgelegt ist, sich in Reaktion auf das Drücken der in der betreffenden ringförmigen Aussparung (11a, 11b) eingeklemmten Federplatte (1a, 1b) auf die durch die betreffende ringförmige Aussparung (11a, 11b) definierte zweite Anlagefläche (102) in radialer Richtung zu dehnen.
10. Das Gehäuseteil (3c) nach Aspekt 9, dadurch gekennzeichnet, dass für jeden der ein oder mehreren Ausschnitte:
   - eine Ausschnittslänge (AL), die vorzugsweise 3 bis 12 mm beträgt, und/oder
   - eine Dicke (D), die vorzugsweise 0,3 bis 1 mm beträgt, des Gehäusebalkens (17) in einem Bereich angrenzend zu dem Ausschnitt (19a, 19b), und/oder
   - ein oder mehrere Krümmungsradien (RC), die vorzugsweise 0,2 bis 1,2 mm betragen, der betreffenden Balkenoberfläche, und/oder
   - eine Position und/oder radiale Länge einer Öffnung (O) in dem Bereich des Gehäusebalkens (17), der sich zwischen und angrenzend zu den Ausschnitten (19a, 19b) erstreckt,
   derart ausgestaltet ist bzw. sind, dass der Gehäusebalken (17) in dem Bereich angrenzend zu dem Ausschnitt (19a, 19b) ausgelegt ist, sich in Reaktion auf das Drücken der in der betreffenden ringförmigen Aussparung (11a, 11b) eingeklemmten Federplatte (1a, 1b) auf die durch die betreffende ringförmige Aussparung (11a, 11b) definierte zweite Anlagefläche (102) in radialer Richtung zu dehnen.
11. Das Gehäuseteil (3c) nach irgendeinem der vorangehenden Aspekte, dadurch gekennzeichnet, dass ein oder mehrere der Klemmelemente (8_1, 8_2) einen an das dazugehörige Endstück (8a) angrenzenden Arm (8b) aufweist, und sich ein Abschnitt (8c) des Arms (8b) zu dem angrenzenden Endstück (8a) hin verjüngt.
12. Das Gehäuseteil (3c) nach Aspekt 11, dadurch gekennzeichnet, dass der sich verjüngende Abschnitt (8c) des Arms (8b) ein oder mehrere Aussparungen (8e,1; 8e,2) im Arm (8b) aufweist, vorzugsweise wobei die Aussparungen jeweils eine Tiefe (t1; t2) von 10% bis 50%, 10% bis 35% oder 15% bis 25% der größten Dicke oder größten Querschnittsausdehnung (D2,1; D2,2) des Arms (8b) in dem Bereich der jeweiligen Aussparung (8e,1; 8e,2) aufweisen.
13. Das Gehäuseteil (3c) nach Aspekt 12, dadurch gekennzeichnet, dass die ein oder mehreren Aussparungen (8e) mindestens eine Aussparung mit abgerundeter Kontur, vorzugsweise mit Krümmungsradius von 0,25 bis 0,75 mm, aufweisen.
14. Das Gehäuseteil (3c) nach Aspekt 12 oder 13, dadurch gekennzeichnet, dass die ein oder mehreren Aussparungen (8e) zwei oder mehr wellenförmige Aussparungen sind.
15. Das Gehäuseteil (3c) nach irgendeinem der vorangehenden Aspekte 11 bis 14, dadurch gekennzeichnet, dass jedes der Klemmelemente (8) derart ausgelegt ist, dass, wenn das zweite Ende der Federplatte (1a, 1b) auf die zweite Anlagefläche (102) drückt, das Endstück (8a) des Klemmelements (8) um einen Drehpunkt (D) gegenüber dem Abschnitt (8c) des Arms (8b) gedreht wird und dadurch die Klemm- und/oder Bremskraft auf das zu klemmende und/oder zu bremsende Objekt (5) über die Klemmfläche (7) übertragen wird.
16. Das Gehäuseteil (3c) nach irgendeinem der vorangehenden Aspekte 11 bis 15, dadurch gekennzeichnet, dass jedes der Klemmelements (8) an einer ersten, dem Objekt zugewandten Seitenfläche des dazugehörigen Endstücks (8a) die dazugehörige Klemmfläche (7) aufweist und an einer zweiten Seitenfläche des dazugehörigen Endstücks (8a), die vorzugsweise der ersten Seitenfläche und/oder dem Objekt (5) abgewandt und/oder der ersten Seitenfläche gegenüberliegend ist, die zweite Anlagefläche (102) aufweist.
17. Das Gehäuseteil (3c) nach irgendeinem der vorangehenden Aspekte 11 bis 16, dadurch gekennzeichnet, dass sich der Abschnitt (8c) des Arms (8b) zur zweiten Anlagefläche (102) hin und/oder im Bereich des Drehpunktes verjüngt.
18. Das Gehäuseteil (3c) nach irgendeinem der vorangehenden Aspekte 11 bis 17, dadurch gekennzeichnet, dass die Verjüngung, insbesondere die mindestens eine Aussparung mit abgerundeter Kontur, im Bereich des Übergangs des Arms (8b) zum Endstück (8a) vorliegt.
19. Das Gehäuseteil (3c) nach irgendeinem der vorangehenden Aspekte 15 bis 18, dadurch gekennzeichnet, dass der Drehpunkt (D) innerhalb des Klemmelements (8) oder in einem Bereich um das Klemmelement (8) herum angeordnet ist, jeweils vorzugsweise im Bereich des Abschnitts (8c) des Arms (8b) oder im Bereich zwischen dem Abschnitt (8c) des Arms (8b) und der Klemmfläche (7) oder im Bereich des Endstücks (8a).
20. Das Gehäuseteil (3c) nach irgendeinem der vorangehenden Aspekte 15 bis 19, dadurch gekennzeichnet, dass das Gehäuseteil (3c) derart ausgelegt ist, dass die Drehung mittels des auf die zweite Anlagefläche (102) Drücken der Federplatte (1a, 1b) bewirkt wird, was vorzugsweise das Klemmelement (8) elastisch verformt.
21. Das Gehäuseteil (3c) nach irgendeinem der vorangehenden Aspekte 15 bis 20, dadurch gekennzeichnet, dass das Endstück (8a) des Klemmelements (8) entlang der Klemmfläche (7) einen Abschnitt eines Hebelarms (8d) bildet, der derart ausgelegt ist, dass bei der Drehung des Hebelarms (8d) um den Drehpunkt (D) ein erstes Ende (R1) des Hebelarmabschnitts (8a) um einen ersten radialen Hub (H1) näher an das Objekt (5) bewegt wird, vorzugsweise wobei der erste radiale Hub (H1) dem Ein- bis Zehnfachen, vorzugsweise dem 1,25- bis Fünffachen, besonders bevorzugt dem 1,35-bis Zweifachen, eines zweiten radialen Hubes (H2) entspricht, durch den ein zweites Ende (R2) des Hebelarmabschnitts (8a) bei der Drehung des Hebelarms (8d) um den Drehpunkt (D) näher an das Objekt (5) bewegt wird, welches zweite Ende (R2) des Hebelarmabschnitts (8d) näher an dem Drehpunkt (D) liegt als das erste Ende (R1) des Hebelarmabschnitts (8d).
22. Das Gehäuseteil (3c) nach Aspekt 21, dadurch gekennzeichnet, dass das erste Ende (R1) des Hebelarmabschnitts (8d) im Bereich einer ersten Begrenzung der Klemmfläche (7) liegt, welche erste Begrenzung vorzugsweise am weitesten vom Drehpunkt (D) entfernt ist, und das zweite Ende (R2) des Hebelarmabschnitts (8d) im Bereich einer zweiten Begrenzung der Klemmfläche (7) liegt, welche zweite Begrenzung vorzugsweise am nächsten am Drehpunkt (D) angeordnet ist.
23. Das Gehäuseteil (3c) nach irgendeinem der vorangehenden Aspekte 21 bis 22, dadurch gekennzeichnet, dass:
   - der Abstand (L2) von dem Drehpunkt (D) zu dem zweiten Ende (R1) des Hebelarmabschnitts (8d) und die Verjüngung, und/oder
   - eine Ausschnittslänge, und/oder
   - eine Dicke des Gehäusebalkens (17) in einem Bereich angrenzend zu dem Ausschnitt (19a, 19b), und/oder
   - ein oder mehrere Krümmungsradien der betreffenden Balkenoberfläche,
   - eine Position und/oder radiale Länge einer Öffnung (O) in dem Bereich des Gehäusebalkens (17), der sich zwischen und angrenzend zu den Ausschnitten (19a, 19b) erstreckt,
   derart gewählt ist bzw. sind, dass:
   - der zweite radiale Hub (H2) mindestens 0,06 mm, bevorzugt mindestens 0,07 mm, besonders bevorzugt mindestens 0,08 mm beträgt
      und/oder
   - der erste radiale Hub (H1) dem Ein- bis Zehnfachen, vorzugsweise dem 1,25- bis Fünffachen, besonders bevorzugt dem 1,35- bis Zweifachen, eines zweiten radialen Hubes (H2) entspricht, durch den ein zweites Ende (R2) des Hebelarmabschnitts (8a) bei der Drehung des Hebelarms (8d) um den Drehpunkt (D) näher an das Objekt (5) bewegt wird, welches zweite Ende (R2) des Hebelarmabschnitts (8d) näher an dem Drehpunkt (D) liegt als das erste Ende (R1) des Hebelarmabschnitts (8d).
24. Das Gehäuseteil (3c) nach irgendeinem der vorangehenden Aspekte 15 bis 23, dadurch gekennzeichnet, dass die Verjüngung derart ausgeprägt sein, dass die dünnste Dicke oder die geringste Querschnittsausdehnung (D1; D1,1; D1,2) des Arms (8b) an dem dem Endstück (8a) zugewandten Ende des Abschnitts (8c) weniger als 85%, 80% 75%, 60%, oder 50% von der der Dicke oder der Querschnittsausdehnung (D2; D2,1; D2,2) des Arms (8b) beträgt, die an dem gegenüberliegenden Ende des Abschnitts (8c), das dem Endstück (8a) abgewandt ist, vorliegt.
25. Eine Klemm- und/oder Bremsvorrichtung (10) zum Klemmen und/oder Bremsen eines zu klemmenden und/oder bremsenden Objekts (5), umfassend:
   ein Gehäuse (3) umfassend:
      ein oder mehrere Gehäuseteile (3c) nach irgendeinem der vorangehenden Aspekte; und
      für jedes der Gehäuseteile (3c), eine erste dem Gehäuseteil (3c) zugewiesene Abdeckung (15, 3a, 3c) und eine zweite dem Gehäuseteil zugewiesene Abdeckung (16, 3b, 3c);
   wobei für jedes der Gehäuseteile (3c):
      die erste Abdeckung (15) derart die erste Aussparung (11a) abdeckt und die zweite Abdeckung derart die zweite Aussparung (11b) abdeckt, dass die Aussparungen (11a, 11b) zusammen einen Innenraum (13) innerhalb des Gehäuses (3) bilden, wobei der Innenraum (13) eine darin angeordnete Feder (1) umfasst, welche Feder (1) eine erste ringförmige Federplatte (1a) und eine zweite ringförmige Federplatte (1b) umfasst, wobei die erste Federplatte (1a) zwischen der durch die erste Aussparung (11a) definierten ersten Anlagefläche (101) und der durch die erste Aussparung (11a) definierten zweiten Anlagefläche (102) eingeklemmt ist und die zweite Federplatte (1b) zwischen der durch die zweite Aussparung (11b) definierten ersten Anlagefläche (101) und der durch die zweite Aussparung (11b) definierten zweiten Anlagefläche (102) eingeklemmt ist, so dass in dem Innenraum (13) mindestens ein Druckraum (2, 4) gebildet wird, der zumindest teilweise durch die Federplatten (1a, 1b) begrenzt wird, wobei der Druckraum (2, 4) be- oder entlüftbar ist und mit Überdruck eines dem Gehäuse (3) zuführbaren Druckmediums beaufschlagbar ist, und wobei die Federplatten (1a, 1b) derart relativ zu den mindestens einen Druckraum (2, 4) angeordnet sind, dass durch Be- oder Entlüften des Druckraums (2, 4) oder Beaufschlagung des Druckraum (2, 4) mit Überdruck, eine Biegung mindestens einer der Federplatten (1a, 1b) veränderbar ist und dadurch die Klemm- und/oder Bremsvorrichtung (10) zwischen einem geöffneten Zustand, in dem ein zu klemmendes und/oder zu bremsendes Objekt (5) von den Klemmflächen (7) beabstandet ist, und einem geschlossenen Zustand, in dem ein oder mehrere der Klemmflächen (7) eine Klemm- und/oder Bremskraft auf das Objekt (5) übertragen, wechselt.
26. Die Klemm- und/oder Bremsvorrichtung (10) nach Aspekt 25, wobei, für jedes der Gehäuseteile (3c), der mindestens eine Druckraum einen ersten Druckraum (4) umfasst, der außerhalb der Feder (1) zwischen mindestens einer der Federplatten (1a, 1b) und dem Gehäuse (3) angeordnet ist,
   wobei die erste Federplatte (1a) ausgelegt ist, durch das Belüften des ersten Druckraums (4) oder durch das Beaufschlagen des ersten Druckraum (4) mit Überdruck, ihre Biegung zu reduzieren um, bei Aufstützen des ersten Endes der ersten Federplatte (1a) an der durch die erste Aussparung (11a) definierten ersten Anlagefläche (101), mit dem zweiten Ende der ersten Federplatte (1a) auf die durch die erste Aussparung (11a) definierten zweite Anlagefläche (102) derart zu drücken, dass dadurch eine Übertragung einer Klemm- und/oder Bremskraft von der ersten Klemmfläche (7) auf das zu klemmende und/oder bremsende Objekt (5) bewirkt wird und die Klemm- und/oder Bremsvorrichtung (10) von dem geöffneten Zustand in den geschlossenen Zustand wechselt;
      und/oder
   wobei die zweite Federplatte (1b) ausgelegt ist, durch das Belüften des ersten Druckraums (4) oder durch das Beaufschlagen des ersten Druckraum (2, 4) mit Überdruck, ihre Biegung zu reduzieren um, bei Aufstützen des ersten Endes der zweiten Federplatte (1b) an der durch die zweite Aussparung (11b) definierten ersten Anlagefläche (101), mit dem zweiten Ende der zweiten Federplatte (11b) auf die durch die zweite Aussparung (11b) definierten zweite Anlagefläche (102) derart zu drücken, dass dadurch eine Übertragung einer Klemm- und/oder Bremskraft von der zweiten Klemmfläche (7) auf ein zu klemmendes und/oder bremsendes Objekt (5) bewirkt wird und die Klemm- und/oder Bremsvorrichtung (10) von dem geöffneten Zustand in den geschlossenen Zustand wechselt.
27. Die Klemm- und/oder Bremsvorrichtung (10) nach Aspekt 25 oder 26, wobei die Klemm- und/oder Bremsvorrichtung (10) für jedes der Gehäuseteile (3c) derart ausgelegt ist, dass durch das Belüften des ersten Druckraums (4) oder durch das Beaufschlagendes ersten Druckraums (4) mit Überdruck, sich die erste Anlagefläche (101) und die zweite Anlagefläche (102) zumindest einer der beiden Aussparungen (11a, 11b) voneinander wegbewegen und/oder sich die Biegung mindestens einer der Federplatten (1a, 1b) verringert, und dadurch die Klemm- und/oder Bremsvorrichtung (10) von dem geöffneten Zustand in den geschlossenen Zustand wechselt.
28. Die Klemm- und/oder Bremsvorrichtung (10) nach irgendeinem der Aspekte 25 bis 27, wobei für jedes der Gehäuseteile (3c): der mindestens eine Druckraum einen zweiten Druckraum (2) umfasst, wobei der zweite Druckraum (2) innerhalb der Feder (1) zwischen den beiden Federplatten (1a, 1b) angeordnet ist, vorzugsweise wobei die Klemm- und/oder Bremsvorrichtung (10) derart ausgelegt ist, dass durch das Belüften des zweiten Druckraums (2) oder durch das Beaufschlagen des zweiten Druckraums (2) mit Überdruck, sich die erste Anlagefläche (101) und die zweite Anlagefläche (102) zumindest einer der beiden Aussparungen (11a, 11b) aufeinander zu bewegen und/oder sich die Biegung mindestens einer der Federplatten (1a, 1b) vergrößert, und dadurch die Klemm- und/oder Bremsvorrichtung (10) von dem geschlossenen Zustand in den geöffneten Zustand wechselt.
29. Die Klemm- und/oder Bremsvorrichtung (10) nach irgendeinem der Aspekte 25 bis 28, wobei ein oder mehrere der Gehäuseteile (3c) derart geformt sind, dass wenn die Klemm- und/oder Bremsvorrichtung (10) von dem geöffneten Zustand in dem geschlossenen Zustand wechselt, der erste radiale Hub (H1) des betreffenden Klemmelements (8) zum Objekt (5) hin dem Ein- bis Zehnfachen, vorzugsweise dem 1,25- bis Fünffachen, besonders bevorzugt dem 1,35- bis Zweifachen, des zweiten radialen Hubes (H2) des betreffenden Klemmelements (8) zum Objekt (5) hin entspricht.
30. Die Klemm- und/oder Bremsvorrichtung (10) nach irgendeinem der Aspekte 25 bis 29, wobei die ein oder mehrere Gehäuseteile (3c) zwei, drei oder mehr in Reihe angeordnete Gehäuseteile (3c) nach irgendeinem der vorangehenden Aspekte 1 bis 24 umfassen.
31. Die Klemm- und/oder Bremsvorrichtung (10) nach Aspekt 30, wobei die zweite Abdeckung (16) eines ersten Gehäuseteils der Gehäuseteile auch die erste Abdeckung (15) eines an das erste Gehäuseteil benachbarte zweiten Gehäuseteil der Gehäuseteile bildet.
32. Die Klemm- und/oder Bremsvorrichtung (10) nach Aspekt 31, wobei die zweite Abdeckung (16) des zweiten Gehäuseteils auch die erste Abdeckung (15) eines an das zweite Gehäuseteil benachbarte dritten Gehäuseteil der Gehäuseteile bildet.
33. Die Klemm- und/oder Bremsvorrichtung (10) nach einem der Aspekte 25 bis 32, wobei die erste und/oder zweite Abdeckung zumindest eines der Gehäuseteile ein Gehäuseteil (3c) nach einem der Aspekte 1 bis 25 ist.
34. Die Klemm- und/oder Bremsvorrichtung (10) nach einem der Aspekte 25 bis 33, wobei die erste und/oder zweite Abdeckung (15, 16) zumindest eines der Gehäuseteile ein anderes Gehäuseteil (3a, 3b) ist, welches andere Gehäuseteil umfasst:
   eine ringförmige Federplatte (1a, 1b);
   eine ringförmige Aussparung (11a, 11b), wobei die ringförmige Federplatte (1a, 1b) zwischen einer durch die Aussparung (11a) definierten ersten Anlagefläche (101) und einer durch die Aussparung (11a) definierten zweiten Anlagefläche (102) eingeklemmt ist; und
   ein Klemmelement (8) mit einer Klemmfläche (7a), wobei das Klemmelement (8) ausgelegt ist, wenn ein erstes Ende der Federplatte (1a, 1b) an der durch die Aussparung (11a) definierten ersten Anlagefläche (101) abstützt und ein zweites Ende der Federplatte (1a) auf die durch die Aussparung (11a) definierten zweite Anlagefläche (102) drückt, eine Klemm- und/oder Bremskraft auf ein zu klemmendes und/oder zu bremsendes Objekt (5) über die Klemmfläche (7a) zu übertragen.
35. Verwendung des Gehäuseteils nach irgendeinem der Aspekte 1 bis 24 oder der Klemm- und/oder Bremsvorrichtung nach irgendeinem der Ansprüche 25 bis 34 zum Klemmen und/oder Bremsen eines Objekts, insbesondere einer rotierbaren Welle.

In der Beschreibung und in den Figuren sind bevorzugte Ausführungsformen der durch die folgenden Ansprüche beanspruchten Erfindung beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Erfindung in ihren verschiedenen Ausgestaltungen Verwendung finden.

Die verschiedenen oben beschriebenen Aspekte und Ausführungsformen können kombiniert werden, um noch weitere Ausführungsformen zu schaffen. Diese und andere Änderungen können an den Ausführungsformen im Lichte der obigen detaillierten Beschreibung vorgenommen werden. Im Allgemeinen sollten die in den folgenden Ansprüchen verwendeten Begriffe nicht so ausgelegt werden, dass sie die Ansprüche auf die in der Beschreibung und den Ansprüchen offengelegten spezifischen Aspekte und Ausführungsformen beschränken, sondern so, dass sie alle möglichen Ausführungsformen zusammen mit dem vollen Umfang der Äquivalente, auf die diese Ansprüche Anspruch haben, umfassen.

## Patentansprüche

1. Ein Gehäuseteil (3c) für eine pneumatische Klemm- und/oder Bremsvorrichtung (10), das Gehäuseteil (3c) umfassend:
eine erste ringförmige Aussparung (11a) zum Einklemmen einer ersten ringförmigen Federplatte (1a);
ein erstes Klemmelement (8_1) umfassend ein erstes Endstück (8a), wobei das erste Endstück (8a) eine erste Endfläche (8f) und eine erste Klemmfläche (7a) aufweist, wobei das erste Klemmelement (8_1) ausgelegt ist, wenn die erste Federplatte (1a) derart in der ersten Aussparung (11a) zwischen einer durch die erste Aussparung (11a) definierten ersten Anlagefläche (101) und einer durch die erste Aussparung (11a) definierten zweiten Anlagefläche (102) eingeklemmt ist, dass sich ein erstes Ende der ersten Federplatte (1a) an der durch die erste Aussparung (11a) definierten ersten Anlagefläche (101) abstützt und ein zweites Ende der ersten Federplatte (1a) auf die durch die erste Aussparung (11a) definierten zweite Anlagefläche (102) drückt, eine erste Klemm- und/oder Bremskraft auf ein erstes zu klemmendes und/oder zu bremsendes Objekt (5) über die erste Klemmfläche (7a) zu übertragen;
eine zweite ringförmige Aussparung (11b) zum Einklemmen einer zweiten ringförmigen Federplatte (1b);
ein zweites Klemmelement (8_2) umfassend ein zweites Endstück (8a), wobei das zweite Endstück (8a) eine zweite Endfläche (8f) und eine zweiten Klemmfläche (7b) aufweist, wobei das zweite Klemmelement (8_2) ausgelegt ist, wenn die zweite Federplatte (1b) derart in der zweiten Aussparung (11b) zwischen einer durch die zweite Aussparung (11b) definierten ersten Anlagefläche (101) und einer durch die zweite Aussparung (11b) definierten zweiten Anlagefläche (102) eingeklemmt ist, dass sich ein erstes Ende der zweiten Federplatte (1b) an der durch die zweite Aussparung (11b) definierten ersten Anlagefläche (101) abstützt und ein zweites Ende der zweiten Federplatte (1b) auf die durch die zweite Aussparung (11b) definierten zweite Anlagefläche (102) drückt, eine zweite Klemm- und/oder Bremskraft auf ein zweites zu klemmendes und/oder zu bremsendes Objekt (5) über die zweite Klemmfläche (7b) zu übertragen;
**dadurch gekennzeichnet, dass**
die erste Endfläche (8f) des ersten Klemmelements (8_1) und die zweite Endfläche (8f) des zweiten Klemmelements (8_2) voneinander abgewandt, und vorzugsweise in entgegengesetzte Richtungen orientiert, angeordnet sind.

2. Das Gehäuseteil (3c) nach Anspruch 1, **dadurch gekennzeichnet, dass** die erste Klemm- und/oder Bremskraft in einer ersten Klemmebene (K1) erfolgt, die durch zwei Vektoren aufgespannt wird, die jeweils einen Radius (R) der ersten ringförmigen Aussparung (11a) bilden und sich eine Längsachse (LA1) des ersten Endstücks quer, vorzugsweise senkrecht, zu der ersten Klemmebene (K1) erstreckt und/oder die zweite Klemm- und/oder Bremskraft in einer zweiten Klemmebene (K2) erfolgt, die durch zwei Vektoren aufgespannt wird, die jeweils einen Radius (R) der zweiten ringförmigen Aussparung (11b) bilden und sich eine Längsachse (LA2) des zweiten Endstücks quer, vorzugsweise senkrecht, zu der zweiten Klemmebene (K2) erstreckt, vorzugsweise wobei die erste Endfläche (8f) des ersten Klemmelements (8_1) und die zweite Endfläche (8f) des zweiten Klemmelements (8_2) in entgegengesetzte Richtungen der Längsachsen (LA1, LA2) der Endstücke orientiert sind.

3. Das Gehäuseteil (3c) nach Anspruch 1 oder 2, **dadurch gekennzeichnet, dass** das Gehäuseteil einen, vorzugsweise einteiligen oder einstückigen, Gehäusebalken (17) aufweist, der mit den beiden Klemmelementen (8_1, 8_2) verbunden ist und sich zwischen einem äußeren Rand und einem inneren Rand des Gehäuseteils und zwischen den Aussparungen (11a, 11b) erstreckt, vorzugsweise wobei der Gehäusebalken (17) auf einer ersten Balkenoberfläche die erste ringförmige Aussparung ausbildet und auf einer zweiten Balkenoberfläche, die der ersten Balkenoberfläche abgewandt und/oder entgegengesetzt ist, die zweite ringförmige Aussparung ausbildet.

4. Das Gehäuseteil (3c) nach Anspruch 3, **dadurch gekennzeichnet, dass** der Gehäusebalken sich mit dessen Längsachse (LA3) quer zu der Längsachse (LA1, LA2) des ersten und/oder zweiten Endstücks, und vorzugsweise im Wesentlichen parallel zu der ersten (K1) und/oder zweiten (K1) Klemmebene, erstreckt.

5. Das Gehäuseteil (3c) nach irgendeinem der vorangehenden Ansprüche 3 bis 4, **dadurch gekennzeichnet, dass** die erste Balkenoberfläche im Bereich der ersten ringförmigen Aussparung (11a) einen ersten Ausschnitt (19a) und/oder die zweite Balkenoberfläche im Bereich der zweiten ringförmigen Aussparung (11b) einen zweiten Ausschnitt (19b) ausbildet, vorzugsweise wobei sich für jeden der Ausschnitte (19a, 19b) die in der betreffenden ringförmigen Aussparung eingeklemmte Federplatte über den Ausschnitt hinweg erstreckt.

6. Das Gehäuseteil (3c) nach Anspruch 5, **dadurch gekennzeichnet, dass** ein oder mehrere der Ausschnitte (19a, 19b) derart ausgestaltet sind, dass der Gehäusebalken (17) in dem Bereich angrenzend zu dem Ausschnitt (19a, 19b) ausgelegt ist, sich in Reaktion auf das Drücken der in der betreffenden ringförmigen Aussparung (11a, 11b) eingeklemmten Federplatte (1a, 1b) auf die durch die betreffende ringförmige Aussparung (11a, 11b) definierte zweite Anlagefläche (102) in radialer Richtung zu dehnen.

7. Das Gehäuseteil (3c) nach Anspruch 5 oder 6, **dadurch gekennzeichnet, dass** für jeden der ein oder mehreren Ausschnitte:
- eine Ausschnittslänge (AL), die vorzugsweise 3 bis 12 mm beträgt, und/oder
- eine Dicke (D), die vorzugsweise 0,3 bis 1 mm beträgt, des Gehäusebalkens (17) in einem Bereich angrenzend zu dem Ausschnitt (19a, 19b), und/oder
- ein oder mehrere Krümmungsradien (RC), die vorzugsweise 0,2 bis 1,2 mm betragen, der betreffenden Balkenoberfläche, und/oder
- eine Position und/oder radiale Länge einer Öffnung (O) in dem Bereich des Gehäusebalkens (17), der sich zwischen und angrenzend zu den Ausschnitten (19a, 19b) erstreckt,
derart ausgestaltet ist bzw. sind, dass der Gehäusebalken (17) in dem Bereich angrenzend zu dem Ausschnitt (19a, 19b) ausgelegt ist, sich in Reaktion auf das Drücken der in der betreffenden ringförmigen Aussparung (11a, 11b) eingeklemmten Federplatte (1a, 1b) auf die durch die betreffende ringförmige Aussparung (11a, 11b) definierte zweite Anlagefläche (102) in radialer Richtung zu dehnen.

8. Das Gehäuseteil (3c) nach irgendeinem der vorangehenden Ansprüche, **dadurch gekennzeichnet, dass** ein oder mehrere der Klemmelemente (8_1, 8_2) einen an das dazugehörige Endstück (8a) angrenzenden Arm (8b) aufweist, und sich ein Abschnitt (8c) des Arms (8b) zu dem angrenzenden Endstück (8a) hin verjüngt.

9. Das Gehäuseteil (3c) nach Anspruch 8, **dadurch gekennzeichnet, dass** der sich verjüngende Abschnitt (8c) des Arms (8b) ein oder mehrere Aussparungen (8e,1; 8e,2) im Arm (8b) aufweist, vorzugsweise wobei die Aussparungen jeweils eine Tiefe (t1; t2) von 10% bis 50%, 10% bis 35% oder 15% bis 25% der größten Dicke oder größten Querschnittsausdehnung (D2,1; D2,2) des Arms (8b) in dem Bereich der jeweiligen Aussparung (8e,1; 8e,2) aufweisen.

10. Eine Klemm- und/oder Bremsvorrichtung (10) zum Klemmen und/oder Bremsen eines zu klemmenden und/oder bremsenden Objekts (5), umfassend:
ein Gehäuse (3) umfassend:
ein oder mehrere Gehäuseteile (3c) nach irgendeinem der vorangehenden Ansprüche; und
für jedes der Gehäuseteile (3c), eine erste dem Gehäuseteil (3c) zugewiesene Abdeckung (15, 16, 3a, 3c) und eine zweite dem Gehäuseteil zugewiesene Abdeckung (15, 16, 3b, 3c);
wobei für jedes der Gehäuseteile (3c):
die erste Abdeckung derart die erste Aussparung (11a) abdeckt und die zweite Abdeckung derart die zweite Aussparung (11b) abdeckt, dass die Aussparungen (11a, 11b) zusammen einen Innenraum (13) innerhalb des Gehäuses (3) bilden, wobei der Innenraum (13) eine darin angeordnete Feder (1) umfasst, welche Feder (1) eine erste ringförmige Federplatte (1a) und eine zweite ringförmige Federplatte (1b) umfasst, wobei die erste Federplatte (1a) zwischen der durch die erste Aussparung (11a) definierten ersten Anlagefläche (101) und der durch die erste Aussparung (11a) definierten zweiten Anlagefläche (102) eingeklemmt ist und die zweite Federplatte (1b) zwischen der durch die zweite Aussparung (11b) definierten ersten Anlagefläche (101) und der durch die zweite Aussparung (11b) definierten zweiten Anlagefläche (102) eingeklemmt ist, so dass in dem Innenraum (13) mindestens ein Druckraum (2, 4) gebildet wird, der zumindest teilweise durch die Federplatten (1a, 1b) begrenzt wird, wobei der Druckraum (2, 4) be- oder entlüftbar ist und mit Überdruck eines dem Gehäuse (3) zuführbaren Druckmediums beaufschlagbar ist, und wobei die Federplatten (1a, 1b) derart relativ zu den mindestens einen Druckraum (2, 4) angeordnet sind, dass durch Be- oder Entlüften des Druckraums (2, 4) oder Beaufschlagung des Druckraum (2, 4) mit Überdruck, eine Biegung mindestens einer der Federplatten (1a, 1b) veränderbar ist und dadurch die Klemm- und/oder Bremsvorrichtung (10) zwischen einem geöffneten Zustand, in dem ein zu klemmendes und/oder zu bremsendes Objekt (5) von den Klemmflächen (7) beabstandet ist, und einem geschlossenen Zustand, in dem ein oder mehrere der Klemmflächen (7) eine Klemm- und/oder Bremskraft auf das Objekt (5) übertragen, wechselt.

11. Die Klemm- und/oder Bremsvorrichtung (10) nach Anspruch 10, wobei, für jedes der Gehäuseteile (3c), der mindestens eine Druckraum einen ersten Druckraum (4) umfasst, der außerhalb der Feder (1) zwischen mindestens einer der Federplatten (1a, 1b) und dem Gehäuse (3) angeordnet ist,
wobei die erste Federplatte (1a) ausgelegt ist, durch das Belüften des ersten Druckraums (4) oder durch das Beaufschlagen des ersten Druckraum (4) mit Überdruck, ihre Biegung zu reduzieren um, bei Aufstützen des ersten Endes der ersten Federplatte (1a) an der durch die erste Aussparung (11a) definierten ersten Anlagefläche (101), mit dem zweiten Ende der ersten Federplatte (1a) auf die durch die erste Aussparung (11a) definierten zweite Anlagefläche (102) derart zu drücken, dass dadurch eine Übertragung einer Klemm- und/oder Bremskraft von der ersten Klemmfläche (7) auf das zu klemmende und/oder bremsende Objekt (5) bewirkt wird und die Klemm- und/oder Bremsvorrichtung (10) von dem geöffneten Zustand in den geschlossenen Zustand wechselt;
und/oder
wobei die zweite Federplatte (1b) ausgelegt ist, durch das Belüften des ersten Druckraums (4) oder durch das Beaufschlagen des ersten Druckraum (2, 4) mit Überdruck, ihre Biegung zu reduzieren um, bei Aufstützen des ersten Endes der zweiten Federplatte (1b) an der durch die zweite Aussparung (11b) definierten ersten Anlagefläche (101), mit dem zweiten Ende der zweiten Federplatte (11b) auf die durch die zweite Aussparung (11b) definierten zweite Anlagefläche (102) derart zu drücken, dass dadurch eine Übertragung einer Klemm- und/oder Bremskraft von der zweiten Klemmfläche (7) auf ein zu klemmendes und/oder bremsendes Objekt (5) bewirkt wird und die Klemm- und/oder Bremsvorrichtung (10) von dem geöffneten Zustand in den geschlossenen Zustand wechselt.

12. Die Klemm- und/oder Bremsvorrichtung (10) nach Anspruch 10 oder 11, wobei die Klemm- und/oder Bremsvorrichtung (10) für jedes der Gehäuseteile (3c) derart ausgelegt ist, dass durch das Belüften des ersten Druckraums (4) oder durch das Beaufschlagendes ersten Druckraums (4) mit Überdruck, sich die erste Anlagefläche (101) und die zweite Anlagefläche (102) zumindest einer der beiden Aussparungen (11a, 11b) voneinander wegbewegen und/oder sich die Biegung mindestens einer der Federplatten (1a, 1b) verringert, und dadurch die Klemm- und/oder Bremsvorrichtung (10) von dem geöffneten Zustand in den geschlossenen Zustand wechselt.

13. Die Klemm- und/oder Bremsvorrichtung (10) nach irgendeinem der Ansprüche 10 bis 12, wobei für jedes der Gehäuseteile (3c): der mindestens eine Druckraum einen zweiten Druckraum (2) umfasst, wobei der zweite Druckraum (2) innerhalb der Feder (1) zwischen den beiden Federplatten (1a, 1b) angeordnet ist, vorzugsweise wobei die Klemm- und/oder Bremsvorrichtung (10) derart ausgelegt ist, dass durch das Belüften des zweiten Druckraums (2) oder durch das Beaufschlagen des zweiten Druckraums (2) mit Überdruck, sich die erste Anlagefläche (101) und die zweite Anlagefläche (102) zumindest einer der beiden Aussparungen (11a, 11b) aufeinander zu bewegen und/oder sich die Biegung mindestens einer der Federplatten (1a, 1b) vergrößert, und dadurch die Klemm- und/oder Bremsvorrichtung (10) von dem geschlossenen Zustand in den geöffneten Zustand wechselt.

14. Die Klemm- und/oder Bremsvorrichtung (10) nach irgendeinem der Ansprüche 10 bis 13, wobei ein oder mehrere der Gehäuseteile (3c) derart geformt sind, dass wenn die Klemm- und/oder Bremsvorrichtung (10) von dem geöffneten Zustand in dem geschlossenen Zustand wechselt, der erste radiale Hub (H1) des betreffenden Klemmelements (8) zum Objekt (5) hin dem Ein- bis Zehnfachen, vorzugsweise dem 1,25- bis Fünffachen, besonders bevorzugt dem 1,35- bis Zweifachen, des zweiten radialen Hubes (H2) des betreffenden Klemmelements (8) zum Objekt (5) hin entspricht.

15. Die Klemm- und/oder Bremsvorrichtung (10) nach irgendeinem der Ansprüche 10 bis 14, wobei die ein oder mehrere Gehäuseteile (3c) zwei, drei oder mehr in Reihe angeordnete Gehäuseteile (3c) nach irgendeinem der vorangehenden Ansprüche 1 bis 9 umfassen.

16. Die Klemm- und/oder Bremsvorrichtung (10) nach Anspruch 15, wobei die zweite Abdeckung eines ersten Gehäuseteils der Gehäuseteile auch die erste Abdeckung eines an das erste Gehäuseteil benachbarte zweiten Gehäuseteil der Gehäuseteile bildet.

17. Die Klemm- und/oder Bremsvorrichtung (10) nach Anspruch 16, wobei die zweite Abdeckung des zweiten Gehäuseteils auch die erste Abdeckung eines an das zweite Gehäuseteil benachbarte dritten Gehäuseteil der Gehäuseteile bildet.

18. Die Klemm- und/oder Bremsvorrichtung (10) nach einem der Ansprüche 10 bis 17, wobei die erste und/oder zweite Abdeckung zumindest eines der Gehäuseteile ein Gehäuseteil (3c) nach einem der Ansprüche 1 bis 9 ist.

19. Die Klemm- und/oder Bremsvorrichtung (10) nach einem der Ansprüche 10 bis 18, wobei die erste und/oder zweite Abdeckung zumindest eines der Gehäuseteile ein anderes Gehäuseteil (3a, 3b) ist, welches andere Gehäuseteil umfasst:
eine ringförmige Federplatte (1a, 1b);
eine ringförmige Aussparung (11a, 11b), wobei die ringförmige Federplatte (1a, 1b) zwischen einer durch die Aussparung (11a) definierten ersten Anlagefläche (101) und einer durch die Aussparung (11a) definierten zweiten Anlagefläche (102) eingeklemmt ist; und
ein Klemmelement (8) mit einer Klemmfläche (7a), wobei das Klemmelement (8) ausgelegt ist, wenn ein erstes Ende der Federplatte (1a, 1b) an der durch die Aussparung (11a) definierten ersten Anlagefläche (101) abstützt und ein zweites Ende der Federplatte (1a) auf die durch die Aussparung (11a) definierten zweite Anlagefläche (102) drückt, eine Klemm- und/oder Bremskraft auf ein zu klemmendes und/oder zu bremsendes Objekt (5) über die Klemmfläche (7a) zu übertragen.

20. Verwendung des Gehäuseteils nach irgendeinem der Ansprüche 1 bis 9 oder der Klemm- und/oder Bremsvorrichtung nach irgendeinem der Ansprüche 10 bis 18 zum Klemmen und/oder Bremsen eines Objekts, insbesondere einer rotierbaren Welle.

## Geänderte Patentansprüche

### Geänderte Patentansprüche gemäss Regel 137(2) EPÜ.

1. Ein Gehäuseteil (3c) für eine pneumatische Klemm- und/oder Bremsvorrichtung (10), das Gehäuseteil (3c) umfassend:
eine erste ringförmige Aussparung (11a) zum Einklemmen einer ersten ringförmigen Federplatte (1a);
ein erstes Klemmelement (8_1) umfassend ein erstes Endstück (8a), wobei das erste Endstück (8a) eine erste Endfläche (8f) und eine erste Klemmfläche (7a) aufweist, wobei das erste Klemmelement (8_1) ausgelegt ist, wenn die erste Federplatte (1a) derart in der ersten Aussparung (11a) zwischen einer durch die erste Aussparung (11a) definierten ersten Anlagefläche (101) und einer durch die erste Aussparung (11a) definierten zweiten Anlagefläche (102) eingeklemmt ist, dass sich ein erstes Ende der ersten Federplatte (1a) an der durch die erste Aussparung (11a) definierten ersten Anlagefläche (101) abstützt und ein zweites Ende der ersten Federplatte (1a) auf die durch die erste Aussparung (11a) definierten zweite Anlagefläche (102) drückt, eine erste Klemm- und/oder Bremskraft auf ein erstes zu klemmendes und/oder zu bremsendes Objekt (5) über die erste Klemmfläche (7a) zu übertragen;
eine zweite ringförmige Aussparung (11b) zum Einklemmen einer zweiten ringförmigen Federplatte (1b);
ein zweites Klemmelement (8_2) umfassend ein zweites Endstück (8a), wobei das zweite Endstück (8a) eine zweite Endfläche (8f) und eine zweiten Klemmfläche (7b) aufweist, wobei das zweite Klemmelement (8_2) ausgelegt ist, wenn die zweite Federplatte (1b) derart in der zweiten Aussparung (11b) zwischen einer durch die zweite Aussparung (11b) definierten ersten Anlagefläche (101) und einer durch die zweite Aussparung (11b) definierten zweiten Anlagefläche (102) eingeklemmt ist, dass sich ein erstes Ende der zweiten Federplatte (1b) an der durch die zweite Aussparung (11b) definierten ersten Anlagefläche (101) abstützt und ein zweites Ende der zweiten Federplatte (1b) auf die durch die zweite Aussparung (11b) definierten zweite Anlagefläche (102) drückt, eine zweite Klemm- und/oder Bremskraft auf ein zweites zu klemmendes und/oder zu bremsendes Objekt (5) über die zweite Klemmfläche (7b) zu übertragen;
die erste Endfläche (8f) des ersten Klemmelements (8_1) und die zweite Endfläche (8f) des zweiten Klemmelements (8_2) voneinander abgewandt, und vorzugsweise in entgegengesetzte Richtungen orientiert, angeordnet sind;
wobei das Gehäuseteil einen Gehäusebalken (17) aufweist, der mit den beiden Klemmelementen (8_1, 8_2) verbunden ist und sich zwischen einem äußeren Rand und einem inneren Rand des Gehäuseteils und zwischen den Aussparungen (11a, 11b) erstreckt;
wobei eine erste Balkenoberfläche des Gehäusebalkens (17) im Bereich der ersten ringförmigen Aussparung (11a) einen ersten Ausschnitt (19a) ausbildet und/oder eine zweite Balkenoberfläche des Gehäusebalkens (17) im Bereich der zweiten ringförmigen Aussparung (11b) einen zweiten Ausschnitt (19b) ausbildet;
**dadurch gekennzeichnet, dass**
mindestens einer der ein oder mehreren Ausschnitte (19a, 19b) derart ausgestaltet ist, dass der Gehäusebalken (17) in dem Bereich angrenzend zu dem mindestens einen Ausschnitt (19a, 19b) ausgelegt ist, sich in Reaktion auf das Drücken der in der betreffenden ringförmigen Aussparung (11a, 11b) eingeklemmten Federplatte (1a, 1b) auf die durch die betreffende ringförmige Aussparung (11a, 11b) definierte zweite Anlagefläche (102) in radialer Richtung zu dehnen.

2. Das Gehäuseteil (3c) nach Anspruch 1, **dadurch gekennzeichnet, dass** die erste Klemm- und/oder Bremskraft in einer ersten Klemmebene (K1) erfolgt, die durch zwei Vektoren aufgespannt wird, die jeweils einen Radius (R) der ersten ringförmigen Aussparung (11a) bilden und sich eine Längsachse (LA1) des ersten Endstücks quer, vorzugsweise senkrecht, zu der ersten Klemmebene (K1) erstreckt und/oder die zweite Klemm- und/oder Bremskraft in einer zweiten Klemmebene (K2) erfolgt, die durch zwei Vektoren aufgespannt wird, die jeweils einen Radius (R) der zweiten ringförmigen Aussparung (11b) bilden und sich eine Längsachse (LA2) des zweiten Endstücks quer, vorzugsweise senkrecht, zu der zweiten Klemmebene (K2) erstreckt, vorzugsweise wobei die erste Endfläche (8f) des ersten Klemmelements (8_1) und die zweite Endfläche (8f) des zweiten Klemmelements (8_2) in entgegengesetzte Richtungen der Längsachsen (LA1, LA2) der Endstücke orientiert sind.

3. Das Gehäuseteil (3c) nach Anspruch 1 oder 2, **dadurch gekennzeichnet, dass** der Gehäusebalken(17) vorzugsweise einteilig oder einstückig ist und/oder der Gehäusebalken (17) auf der ersten Balkenoberfläche die erste ringförmige Aussparung ausbildet und auf der zweiten Balkenoberfläche, die der ersten Balkenoberfläche abgewandt und/oder entgegengesetzt ist, die zweite ringförmige Aussparung ausbildet.

4. Das Gehäuseteil (3c) nach Anspruch 3, **dadurch gekennzeichnet, dass** der Gehäusebalken sich mit dessen Längsachse (LA3) quer zu der Längsachse (LA1, LA2) des ersten und/oder zweiten Endstücks, und vorzugsweise im Wesentlichen parallel zu der ersten (K1) und/oder zweiten (K1) Klemmebene, erstreckt.

5. Das Gehäuseteil (3c) nach irgendeinem der vorangehenden Ansprüche 3 bis 4, **dadurch gekennzeichnet, dass** sich für jeden der Ausschnitte (19a, 19b) die in der betreffenden ringförmigen Aussparung eingeklemmte Federplatte über den Ausschnitt hinweg erstreckt.

6. Das Gehäuseteil (3c) nach Ansprüche 1 bis 5, **dadurch gekennzeichnet, dass** für jeden der ein oder mehreren Ausschnitte:
- eine Ausschnittslänge (AL), die vorzugsweise 3 bis 12 mm beträgt, und/oder
- eine Dicke (D), die vorzugsweise 0,3 bis 1 mm beträgt, des Gehäusebalkens (17) in einem Bereich angrenzend zu dem Ausschnitt (19a, 19b), und/oder
- ein oder mehrere Krümmungsradien (RC), die vorzugsweise 0,2 bis 1,2 mm betragen, der betreffenden Balkenoberfläche, und/oder
- eine Position und/oder radiale Länge einer Öffnung (O) in dem Bereich des Gehäusebalkens (17), der sich zwischen und angrenzend zu den Ausschnitten (19a, 19b) erstreckt,
derart ausgestaltet ist bzw. sind, dass der Gehäusebalken (17) in dem Bereich angrenzend zu dem Ausschnitt (19a, 19b) ausgelegt ist, sich in Reaktion auf das Drücken der in der betreffenden ringförmigen Aussparung (11a, 11b) eingeklemmten Federplatte (1a, 1b) auf die durch die betreffende ringförmige Aussparung (11a, 11b) definierte zweite Anlagefläche (102) in radialer Richtung zu dehnen.

7. Das Gehäuseteil (3c) nach irgendeinem der vorangehenden Ansprüche, **dadurch gekennzeichnet, dass** ein oder mehrere der Klemmelemente (8_1, 8_2) einen an das dazugehörige Endstück (8a) angrenzenden Arm (8b) aufweist, und sich ein Abschnitt (8c) des Arms (8b) zu dem angrenzenden Endstück (8a) hin verjüngt.

8. Das Gehäuseteil (3c) nach Anspruch 7, **dadurch gekennzeichnet, dass** der sich verjüngende Abschnitt (8c) des Arms (8b) ein oder mehrere Aussparungen (8e,1; 8e,2) im Arm (8b) aufweist, vorzugsweise wobei die Aussparungen jeweils eine Tiefe (t1; t2) von 10% bis 50%, 10% bis 35% oder 15% bis 25% der größten Dicke oder größten Querschnittsausdehnung (D2,1; D2,2) des Arms (8b) in dem Bereich der jeweiligen Aussparung (8e,1; 8e,2) aufweisen.

9. Eine Klemm- und/oder Bremsvorrichtung (10) zum Klemmen und/oder Bremsen eines zu klemmenden und/oder bremsenden Objekts (5), umfassend:
ein Gehäuse (3) umfassend:
ein oder mehrere Gehäuseteile (3c) nach irgendeinem der vorangehenden Ansprüche; und
für jedes der Gehäuseteile (3c), eine erste dem Gehäuseteil (3c) zugewiesene Abdeckung (15, 16, 3a, 3c) und eine zweite dem Gehäuseteil zugewiesene Abdeckung (15, 16, 3b, 3c);
wobei für jedes der Gehäuseteile (3c):
die erste Abdeckung derart die erste Aussparung (11a) abdeckt und die zweite Abdeckung derart die zweite Aussparung (11b) abdeckt, dass die Aussparungen (11a, 11b) zusammen einen Innenraum (13) innerhalb des Gehäuses (3) bilden, wobei der Innenraum (13) eine darin angeordnete Feder (1) umfasst, welche Feder (1) eine erste ringförmige Federplatte (1a) und eine zweite ringförmige Federplatte (1b) umfasst, wobei die erste Federplatte (1a) zwischen der durch die erste Aussparung (11a) definierten ersten Anlagefläche (101) und der durch die erste Aussparung (11a) definierten zweiten Anlagefläche (102) eingeklemmt ist und die zweite Federplatte (1b) zwischen der durch die zweite Aussparung (11b) definierten ersten Anlagefläche (101) und der durch die zweite Aussparung (11b) definierten zweiten Anlagefläche (102) eingeklemmt ist, so dass in dem Innenraum (13) mindestens ein Druckraum (2, 4) gebildet wird, der zumindest teilweise durch die Federplatten (1a, 1b) begrenzt wird, wobei der Druckraum (2, 4) be- oder entlüftbar ist und mit Überdruck eines dem Gehäuse (3) zuführbaren Druckmediums beaufschlagbar ist, und wobei die Federplatten (1a, 1b) derart relativ zu den mindestens einen Druckraum (2, 4) angeordnet sind, dass durch Be- oder Entlüften des Druckraums (2, 4) oder Beaufschlagung des Druckraum (2, 4) mit Überdruck, eine Biegung mindestens einer der Federplatten (1a, 1b) veränderbar ist und dadurch die Klemm- und/oder Bremsvorrichtung (10) zwischen einem geöffneten Zustand, in dem ein zu klemmendes und/oder zu bremsendes Objekt (5) von den Klemmflächen (7) beabstandet ist, und einem geschlossenen Zustand, in dem ein oder mehrere der Klemmflächen (7) eine Klemm- und/oder Bremskraft auf das Objekt (5) übertragen, wechselt.

10. Die Klemm- und/oder Bremsvorrichtung (10) nach Anspruch 9, wobei, für jedes der Gehäuseteile (3c), der mindestens eine Druckraum einen ersten Druckraum (4) umfasst, der außerhalb der Feder (1) zwischen mindestens einer der Federplatten (1a, 1b) und dem Gehäuse (3) angeordnet ist,
wobei die erste Federplatte (1a) ausgelegt ist, durch das Belüften des ersten Druckraums (4) oder durch das Beaufschlagen des ersten Druckraum (4) mit Überdruck, ihre Biegung zu reduzieren um, bei Aufstützen des ersten Endes der ersten Federplatte (1a) an der durch die erste Aussparung (11a) definierten ersten Anlagefläche (101), mit dem zweiten Ende der ersten Federplatte (1a) auf die durch die erste Aussparung (11a) definierten zweite Anlagefläche (102) derart zu drücken, dass dadurch eine Übertragung einer Klemm- und/oder Bremskraft von der ersten Klemmfläche (7) auf das zu klemmende und/oder bremsende Objekt (5) bewirkt wird und die Klemm- und/oder Bremsvorrichtung (10) von dem geöffneten Zustand in den geschlossenen Zustand wechselt;
und/oder
wobei die zweite Federplatte (1b) ausgelegt ist, durch das Belüften des ersten Druckraums (4) oder durch das Beaufschlagen des ersten Druckraum (2, 4) mit Überdruck, ihre Biegung zu reduzieren um, bei Aufstützen des ersten Endes der zweiten Federplatte (1b) an der durch die zweite Aussparung (11b) definierten ersten Anlagefläche (101), mit dem zweiten Ende der zweiten Federplatte (11b) auf die durch die zweite Aussparung (11b) definierten zweite Anlagefläche (102) derart zu drücken, dass dadurch eine Übertragung einer Klemm- und/oder Bremskraft von der zweiten Klemmfläche (7) auf ein zu klemmendes und/oder bremsendes Objekt (5) bewirkt wird und die Klemm- und/oder Bremsvorrichtung (10) von dem geöffneten Zustand in den geschlossenen Zustand wechselt.

11. Die Klemm- und/oder Bremsvorrichtung (10) nach Anspruch 9 oder 10, wobei die Klemm- und/oder Bremsvorrichtung (10) für jedes der Gehäuseteile (3c) derart ausgelegt ist, dass durch das Belüften des ersten Druckraums (4) oder durch das Beaufschlagendes ersten Druckraums (4) mit Überdruck, sich die erste Anlagefläche (101) und die zweite Anlagefläche (102) zumindest einer der beiden Aussparungen (11a, 11b) voneinander wegbewegen und/oder sich die Biegung mindestens einer der Federplatten (1a, 1b) verringert, und dadurch die Klemm- und/oder Bremsvorrichtung (10) von dem geöffneten Zustand in den geschlossenen Zustand wechselt.

12. Die Klemm- und/oder Bremsvorrichtung (10) nach irgendeinem der Ansprüche 9 bis 11, wobei für jedes der Gehäuseteile (3c): der mindestens eine Druckraum einen zweiten Druckraum (2) umfasst, wobei der zweite Druckraum (2) innerhalb der Feder (1) zwischen den beiden Federplatten (1a, 1b) angeordnet ist, vorzugsweise wobei die Klemm- und/oder Bremsvorrichtung (10) derart ausgelegt ist, dass durch das Belüften des zweiten Druckraums (2) oder durch das Beaufschlagen des zweiten Druckraums (2) mit Überdruck, sich die erste Anlagefläche (101) und die zweite Anlagefläche (102) zumindest einer der beiden Aussparungen (11a, 11b) aufeinander zu bewegen und/oder sich die Biegung mindestens einer der Federplatten (1a, 1b) vergrößert, und dadurch die Klemm- und/oder Bremsvorrichtung (10) von dem geschlossenen Zustand in den geöffneten Zustand wechselt.

13. Die Klemm- und/oder Bremsvorrichtung (10) nach irgendeinem der Ansprüche 9 bis 12, wobei ein oder mehrere der Gehäuseteile (3c) derart geformt sind, dass wenn die Klemm- und/oder Bremsvorrichtung (10) von dem geöffneten Zustand in dem geschlossenen Zustand wechselt, der erste radiale Hub (H1) des betreffenden Klemmelements (8) zum Objekt (5) hin dem Ein- bis Zehnfachen, vorzugsweise dem 1,25- bis Fünffachen, besonders bevorzugt dem 1,35- bis Zweifachen, des zweiten radialen Hubes (H2) des betreffenden Klemmelements (8) zum Objekt (5) hin entspricht.

14. Die Klemm- und/oder Bremsvorrichtung (10) nach irgendeinem der Ansprüche 9 bis 13, wobei die ein oder mehrere Gehäuseteile (3c) zwei, drei oder mehr in Reihe angeordnete Gehäuseteile (3c) nach irgendeinem der vorangehenden Ansprüche 1 bis 8 umfassen.

15. Die Klemm- und/oder Bremsvorrichtung (10) nach Anspruch 14, wobei die zweite Abdeckung eines ersten Gehäuseteils der Gehäuseteile auch die erste Abdeckung eines an das erste Gehäuseteil benachbarte zweiten Gehäuseteil der Gehäuseteile bildet.

16. Die Klemm- und/oder Bremsvorrichtung (10) nach Anspruch 15, wobei die zweite Abdeckung des zweiten Gehäuseteils auch die erste Abdeckung eines an das zweite Gehäuseteil benachbarte dritten Gehäuseteil der Gehäuseteile bildet.

17. Die Klemm- und/oder Bremsvorrichtung (10) nach einem der Ansprüche 9 bis 16, wobei die erste und/oder zweite Abdeckung zumindest eines der Gehäuseteile ein Gehäuseteil (3c) nach einem der Ansprüche 1 bis 8 ist.

18. Die Klemm- und/oder Bremsvorrichtung (10) nach einem der Ansprüche 9 bis 17, wobei die erste und/oder zweite Abdeckung zumindest eines der Gehäuseteile ein anderes Gehäuseteil (3a, 3b) ist, welches andere Gehäuseteil umfasst:
eine ringförmige Federplatte (1a, 1b);
eine ringförmige Aussparung (11a, 11b), wobei die ringförmige Federplatte (1a, 1b) zwischen einer durch die Aussparung (11a) definierten ersten Anlagefläche (101) und einer durch die Aussparung (11a) definierten zweiten Anlagefläche (102) eingeklemmt ist; und
ein Klemmelement (8) mit einer Klemmfläche (7a), wobei das Klemmelement (8) ausgelegt ist, wenn ein erstes Ende der Federplatte (1a, 1b) an der durch die Aussparung (11a) definierten ersten Anlagefläche (101) abstützt und ein zweites Ende der Federplatte (1a) auf die durch die Aussparung (11a) definierten zweite Anlagefläche (102) drückt, eine Klemm- und/oder Bremskraft auf ein zu klemmendes und/oder zu bremsendes Objekt (5) über die Klemmfläche (7a) zu übertragen.

19. Verwendung des Gehäuseteils nach irgendeinem der Ansprüche 1 bis 8 oder der Klemm- und/oder Bremsvorrichtung nach irgendeinem der Ansprüche 9 bis 17 zum Klemmen und/oder Bremsen eines Objekts, insbesondere einer rotierbaren Welle.
